# EUROPEAN PATENT APPLICATION

(11) **EP 4 745 721 A1**
(43) Date of publication of application: **20.05.2026**
(21) Application number: 24896678.0
(22) Date of filing: 28.11.2024
(51) Int. Cl.: G06F 3/01

(54) **PICTURE EDITING METHOD, ELECTRONIC DEVICE, AND STORAGE MEDIUM**

(30) Priority: 30.11.2023 CN 202311641626
(71) Applicant: Huawei Technologies Co., Ltd., Shenzhen, Guangdong 518129 (CN)
(72) Inventor: AI, Shangyou, Shenzhen, Guangdong 518129 (CN); ZHANG, Yayun, Shenzhen, Guangdong 518129 (CN); OUYANG, Jinwei, Shenzhen, Guangdong 518129 (CN)
(74) Representative: Huawei European IPR
(86) International application number: PCT/CN2024/135415
(87) International publication number: WO 2025/113593

(57) **Abstract**

This application provides a photo editing method, an electronic device, and a storage medium. A first electronic device receives an editing operation performed by a user on a first photo, and displays a first user interface. An editing interface of the first photo includes the first photo and a first option. The first option includes a first node and a second node. The first node is related to a first photo editing algorithm, and the second node is related to a second photo editing algorithm. The first photo is obtained based on a third photo according to the first photo editing algorithm and the second photo editing algorithm. The first electronic device receives a first operation performed by the user on the first node, and displays a second user interface. The second user interface includes a second photo. The second photo is obtained based on the third photo according to the first photo editing algorithm. According to the method, the electronic device may re-edit a photo saved in a gallery application, so that the saved photo is reverted to any editing node. This improves photo editing efficiency.

## Description

This application claims priority to Chinese Patent Application No. 202311641626.6, filed with the China National Intellectual Property Administration on November 30, 2023 and entitled "PHOTO EDITING METHOD, ELECTRONIC DEVICE, AND STORAGE MEDIUM", which is incorporated herein by reference in its entirety.

### TECHNICAL FIELD

This application relates to the field of terminal technologies, and in particular, to a photo editing method, an electronic device, and a storage medium.

### BACKGROUND

With development of terminal technologies, a user may edit a photo saved on an electronic device, for example, adjust contrast, adjust brightness, adjust sharpness, add a beauty effect, add a filter effect, add a watermark effect, or add a mosaic effect, to make a display effect of the photo meet user requirements. After the editing is completed, the user may save an edited photo on the electronic device, and the user may view the edited photo on the electronic device.

If the user is not satisfied with the edited photo, the user may re-edit the original photo and save an edited photo again. However, if the user saves photos with different editing effects a plurality of times, the electronic device saves a plurality of similar photos, and wastes storage space of the electronic device. How to improve photo editing efficiency needs further research.

### SUMMARY

This application provides a photo editing method, an electronic device, and a storage medium, to improve photo editing efficiency.

According to a first aspect, this application provides a photo editing system. The system includes a first electronic device. The first electronic device is configured to display a first gallery interface, where the first gallery interface includes a first photo. The first electronic device is further configured to: receive an editing operation performed by a user on the first photo; display a first user interface in response to the editing operation performed on the first photo, where an editing interface of the first photo includes the first photo and a first option, the first option includes a first node and a second node, the first node is related to a first photo editing algorithm, the second node is related to a second photo editing algorithm, and the first photo is obtained based on a third photo according to the first photo editing algorithm and the second photo editing algorithm; receive a first operation performed by the user on the first node; and display a second user interface in response to the first operation, where the second user interface includes a second photo, and the second photo is obtained based on the third photo according to the first photo editing algorithm.

Optionally, in addition to the first photo editing algorithm and the second photo editing algorithm, the first photo may be obtained according to more other photo editing algorithms. This is not limited in this application.

In some embodiments, the first gallery interface may further include the third photo.

According to the method, the electronic device may re-edit a photo saved in a gallery application, so that the saved photo is reverted to any editing node. This improves photo editing efficiency.

With reference to the first aspect, in a possible implementation, the first electronic device is further configured to: display a second gallery interface, where the second gallery interface includes the third photo; receive an editing operation performed by the user on the third photo; display a third user interface in response to the editing operation performed on the third photo, where the third user interface includes the third photo and a plurality of photo editing options; receive a second operation performed by the user on a first editing option in the plurality of photo editing options, where the first editing option is related to the first photo editing algorithm; obtain a second photo in response to the second operation; receive a third operation performed by the user on a second editing option in the plurality of photo editing options, where the second editing option is related to the second photo editing algorithm; obtain the first photo in response to the third operation; receive a fourth operation of saving the first photo; and save the first photo and an editing record of the first photo in response to the fourth operation.

In a possible implementation, the first electronic device is further configured to: display a second gallery interface, where the second gallery interface includes the third photo; receive an editing operation performed by the user on the third photo; display a third user interface in response to the editing operation performed on the third photo, where the third user interface includes the third photo and a plurality of photo editing options; receive a selection operation performed by the user on a first editing option and a second editing option in the plurality of photo editing options, where the first editing option is related to the first photo editing algorithm, and the second editing option is related to the second photo editing algorithm; process the third photo according to the first photo editing algorithm and the second photo editing algorithm in response to the selection operation, to obtain the first photo; receive a fourth operation of saving the first photo; and save the first photo and an editing record of the first photo in response to the fourth operation.

The third photo is an original photo on which no photo editing algorithm is performed.

After the user adds a photo editing algorithm to the third photo, the first electronic device may display a corresponding editing node in a photo editing interface. In this case, the user may be notified of the photo editing algorithm used for the current photo. In addition, the user may further perform an operation on the editing node displayed in the photo editing interface, so that the photo can be reverted to have an editing effect corresponding to an editing algorithm corresponding to any one or more editing nodes.

With reference to the first aspect, in a possible implementation, the second user interface further includes a second option, and the second option includes the first node.

In this way, the first node is used to notify the user that the second photo is obtained according to the first photo editing algorithm.

With reference to the first aspect, in a possible implementation, the second photo is obtained by the first electronic device based on the third photo according to the first photo editing algorithm.

In this way, when the user re-edits the photo, the electronic device can edit the original photo locally according to a photo editing algorithm selected by the user, to obtain a photo editing effect desired by the user.

With reference to the first aspect, in a possible implementation, the first electronic device is further configured to: send the third photo and an identifier of the first photo editing algorithm to a server in response to the first operation; and receive the second photo sent by the server, where the second photo is obtained by the server based on the third photo according to the first photo editing algorithm.

In this way, when the user re-edits the photo, the electronic device may edit, through the server, the original photo according to the photo editing algorithm selected by the user. A computing capability of the server is stronger than that of the electronic device. In this way, a computing amount of the electronic device can be reduced, and a speed at which the electronic device re-edits the photo can be increased.

With reference to the first aspect, in a possible implementation, the first photo is obtained by the first electronic device by processing the second photo according to the second photo editing algorithm.

In a possible implementation, the first electronic device is further configured to send an identifier of the second photo editing algorithm and the second photo to a server, and the server edits the second photo according to the second photo editing algorithm to obtain the first photo. Then, the server sends the first photo to the first electronic device.

With reference to the first aspect, in a possible implementation, the editing record of the first photo includes first algorithm information, the first algorithm information includes a first algorithm structure and first description information, the first algorithm structure includes an identifier of the first photo editing algorithm and an identifier of the second photo editing algorithm, and the first description information includes description information of the first photo editing algorithm and description information of the second photo editing algorithm.

Optionally, the first algorithm structure further includes a sequence of photo editing algorithms. For example, the first photo editing algorithm points to the second photo editing algorithm, which indicates that the first photo editing algorithm is used before the second photo editing algorithm for the photo.

With reference to the first aspect, in a possible implementation, the first electronic device is specifically configured to: obtain the first algorithm information in the editing record of the first photo in response to an editing operation performed on the first photo; and display the first option in the first user interface based on the first algorithm information.

In this way, the electronic device may display an editing node in the photo editing interface based on the saved first algorithm information, so that the user can re-edit the photo based on the editing node.

With reference to the first aspect, in a possible implementation, the system further includes a second electronic device. The first electronic device is further configured to send the first photo and the editing record of the first photo to the second electronic device. The second electronic device is configured to receive a fifth operation. The second electronic device is further configured to display a fourth user interface in response to the fifth operation. The fourth user interface includes the first photo and a third option, the third option includes a third node and a fourth node, the third node is related to the first photo editing algorithm, and the fourth node is related to the second photo editing algorithm.

For the edited photo, the first electronic device needs to share the photo with the second electronic device, and the first electronic device further needs to share the editing record of the photo with the second electronic device.

In addition to locally re-editing the photo, the electronic device may further share the photo and the editing record of the photo with the second electronic device. The second electronic device may also re-edit the photo shared by the first electronic device, thereby further improving photo editing efficiency.

With reference to the first aspect, in a possible implementation, the second electronic device is specifically configured to: when having permission to read the editing record of the first photo, obtain the first algorithm information in the editing record of the first photo; and display the third option in the fourth user interface based on the first algorithm information.

In a possible implementation, the second electronic device is further configured to: when having no permission to read the editing record of the first photo, display a fifth user interface, where the fifth user interface includes the first photo.

In this way, after receiving the first photo and the editing record of the first photo that are shared by the first electronic device, the second electronic device may determine, based on the first photo and the editing record of the first photo, whether to re-edit the first photo. When the second electronic device has permission to re-edit the first photo, the second electronic device may display an editing node of the first photo, so that the user can re-edit the first photo displayed by the second electronic device. When the second electronic device has no permission to re-edit the first photo, the second electronic device may not display an editing node of the first photo, to notify the second electronic device that the second electronic device has no permission to re-edit the first photo.

With reference to the first aspect, in a possible implementation, the first electronic device is further configured to send application information of a first application to the second electronic device, where the first application is an application for editing the third photo to obtain the first photo.

The second electronic device is specifically configured to: display the first photo in a second application; obtain the first algorithm information in the editing record of the first photo when the first application and the second application are a same application; and display the third option in the fifth user interface based on the first algorithm information.

In some embodiments, the first electronic device is further configured to send the application information of the first application to the second electronic device, and the second electronic device is further configured to obtain application information of the second application. When the first application and the second application are a same application, the second application has permission to re-edit the first photo.

In another embodiment, when the first application and the second application are not a same application, if the first application and the second application share a set of photo editing algorithms, the second application also has permission to re-edit the first photo.

With reference to the first aspect, in a possible implementation, the application information of the first application includes any one or more of the following: a name or identifier of the application, a version number of the application, and a development vendor name of the application. The application information of the second application includes any one or more of the following: a name or identifier of the application, a version number of the application, and a development vendor name of the application.

With reference to the first aspect, in a possible implementation, description information of the description information of the first photo editing algorithm includes any one or more of the following: the identifier or a name of the first photo editing algorithm, a version of the first photo editing algorithm, and a parameter of the first photo editing algorithm, and description information of the description information of the second photo editing algorithm includes any one or more of the following: the identifier or a name of the second photo editing algorithm, a version of the second photo editing algorithm, and a parameter of the second photo editing algorithm.

According to a second aspect, this application provides a photo editing method. The method includes: A first electronic device displays a first gallery interface, where the first gallery interface includes a first photo; the first electronic device receives an editing operation performed by a user on the first photo; the first electronic device displays a first user interface in response to the editing operation performed on the first photo, where an editing interface of the first photo includes the first photo and a first option, the first option includes a first node and a second node, the first node is related to a first photo editing algorithm, the second node is related to a second photo editing algorithm, and the first photo is obtained based on a third photo according to the first photo editing algorithm and the second photo editing algorithm; the first electronic device receives a first operation performed by the user on the first node; and the first electronic device displays a second user interface in response to the first operation, where the second user interface includes a second photo, and the second photo is obtained based on the third photo according to the first photo editing algorithm.

With reference to the second aspect, in a possible implementation, before the first electronic device displays the first gallery interface, the method further includes: The first electronic device displays a second gallery interface, where the second gallery interface includes the third photo; the first electronic device receives an editing operation performed by the user on the third photo; the first electronic device displays a third user interface in response to the editing operation performed on the third photo, where the third user interface includes the third photo and a plurality of photo editing options; the first electronic device receives a second operation performed by the user on a first editing option in the plurality of photo editing options, where the first editing option is related to the first photo editing algorithm; the first electronic device obtains the second photo in response to the second operation; after obtaining the second photo, the first electronic device receives a third operation performed by the user on a second editing option in the plurality of photo editing options, where the second editing option is related to the second photo editing algorithm; the first electronic device obtains the first photo in response to the third operation; the first electronic device receives a fourth operation of saving the first photo; and the first electronic device saves the first photo and an editing record of the first photo in response to the fourth operation.

With reference to the second aspect, in a possible implementation, before the first electronic device displays the first gallery interface, the method further includes: The first electronic device displays a second gallery interface, where the second gallery interface includes the third photo; the first electronic device receives an editing operation performed by the user on the third photo; the first electronic device displays a third user interface in response to the editing operation performed on the third photo, where the third user interface includes the third photo and a plurality of photo editing options; the first electronic device receives a selection operation performed by the user on a first editing option and a second editing option in the plurality of photo editing options, where the first editing option is related to the first photo editing algorithm, and the second editing option is related to the second photo editing algorithm; the first electronic device processes the third photo according to the first photo editing algorithm and the second photo editing algorithm in response to the selection operation, to obtain the first photo; the first electronic device receives a fourth operation of saving the first photo; and the first electronic device saves the first photo and an editing record of the first photo in response to the fourth operation.

With reference to the second aspect, in a possible implementation, the second user interface further includes a second option, and the second option includes the first node.

With reference to the second aspect, in a possible implementation, the second photo is obtained by the first electronic device based on the third photo according to the first photo editing algorithm.

With reference to the second aspect, in a possible implementation, before the first electronic device displays the second user interface, the method further includes: The first electronic device sends the third photo and an identifier of the first image editing algorithm to a server in response to the first operation; and the first electronic device receives the second photo sent by the server, where the second photo is obtained by the server based on the third photo according to the first photo editing algorithm. That the first electronic device displays the second user interface specifically includes: The first electronic device displays the second user interface in response to receiving the second photo sent by the server.

With reference to the second aspect, in a possible implementation, the first photo is obtained by the first electronic device by processing the second photo according to the second photo editing algorithm.

In a possible implementation, the first photo is obtained by the server by processing the second photo according to the second photo editing algorithm.

With reference to the second aspect, in a possible implementation, the editing record of the first photo includes first algorithm information, the first algorithm information includes a first algorithm structure and first description information, the first algorithm structure includes an identifier of the first photo editing algorithm and an identifier of the second photo editing algorithm, and the first description information includes description information of the first photo editing algorithm and description information of the second photo editing algorithm.

With reference to the second aspect, in a possible implementation, that the first electronic device displays the first user interface specifically includes: The first electronic device obtains the first algorithm information in the editing record of the first photo in response to an editing operation performed on the first photo; and the first electronic device displays the first option in the first user interface based on the first algorithm information.

With reference to the second aspect, in a possible implementation, after the first electronic device saves the first photo and the editing record of the first photo, the method further includes: The first electronic device sends the first photo and the editing record of the first photo to a second electronic device, where the editing record of the first photo is used by the second electronic device to process the first photo according to the first photo editing algorithm and the second photo editing algorithm.

With reference to the second aspect, in a possible implementation, description information of the description information of the first photo editing algorithm includes any one or more of the following: the identifier or a name of the first photo editing algorithm, a version of the first photo editing algorithm, and a parameter of the first photo editing algorithm, and description information of the description information of the second photo editing algorithm includes any one or more of the following: the identifier or a name of the second photo editing algorithm, a version of the second photo editing algorithm, and a parameter of the second photo editing algorithm.

According to a third aspect, this application provides an electronic device. The electronic device is a first electronic device. The first electronic device includes a memory and a processor. The memory is coupled to the processor. The memory is configured to store a computer program. When the processor invokes and executes the computer program, the first electronic device is enabled to perform the photo editing method according to any one of the possible implementations of any one of the foregoing aspects.

According to a fourth aspect, this application provides an electronic device. The electronic device is a second electronic device. The second electronic device includes a camera, a memory, and a processor. The camera, the memory, and the processor are coupled. The memory is configured to store a computer program. When the processor invokes and executes the computer program, the second electronic device is enabled to perform the data sharing method according to any one of the possible implementations of any one of the foregoing aspects.

According to a fifth aspect, this application provides a computer-readable storage medium, including instructions. When the instructions are run on a first electronic device, the first electronic device is enabled to perform the data sharing method according to any one of the possible implementations of any one of the foregoing aspects.

According to a sixth aspect, this application provides a computer-readable storage medium, including instructions. When the instructions are run on a second electronic device, the second electronic device is enabled to perform the data sharing method according to any one of the possible implementations of any one of the foregoing aspects.

According to a seventh aspect, this application provides a chip system. The chip system includes one or more processors. The processor is configured to invoke computer instructions, to enable a first electronic device to perform the data sharing method according to any one of the possible implementations of any one of the foregoing aspects.

According to an eighth aspect, this application provides a chip system. The chip system includes one or more processors. The processor is configured to invoke computer instructions, to enable a second electronic device to perform the data sharing method according to any one of the possible implementations of any one of the foregoing aspects.

According to a ninth aspect, this application provides a computer program product including instructions. When the computer program product runs on a first electronic device, the first electronic device is enabled to perform the data sharing method according to any one of the possible implementations of any one of the foregoing aspects.

According to a tenth aspect, this application provides a computer program product including instructions. When the computer program product runs on a second electronic device, the second electronic device is enabled to perform the data sharing method according to any one of the possible implementations of any one of the foregoing aspects.

For descriptions of beneficial effect in the second aspect to the tenth aspect, refer to the descriptions of the beneficial effect of the first aspect. Details are not described herein again in this application.

### BRIEF DESCRIPTION OF DRAWINGS

FIG. 1A to FIG. 1K are diagrams of editing, by a user in a gallery application, a photo saved in the gallery application;
FIG. 2A to FIG. 2D and FIG. 3A to FIG. 3D are diagrams of performing an editing operation on a photo by an electronic device 100;
FIG. 4A is a schematic flowchart of a photo editing method according to this application;
FIG. 4B is a diagram of an algorithm structure according to this application;
FIG. 5A to FIG. 5S are diagrams of re-editing a photo 3201 by an electronic device 100 based on a user operation;
FIG. 6 is a schematic flowchart of a photo re-editing method according to this application;
FIG. 7A to FIG. 7G are diagrams of UIs in which an electronic device 100 shares a photo 3201 with an electronic device 200;
FIG. 8 is a schematic flowchart of a method for re-editing, by an electronic device 100, a photo sent by the electronic device 100 according to this application;
FIG. 9 is a schematic flowchart of a photo editing method according to this application;
FIG. 10 is a diagram of a hardware structure of an electronic device 100 according to this application; and
FIG. 11 is a block diagram of a software structure of an electronic device 100 according to an embodiment of the present invention.

### DESCRIPTION OF EMBODIMENTS

The technical solutions according to embodiments of this application are clearly and completely described below with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise stated, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is usually represented in a form of graphical user interface (graphical user interface, GUI), and is a user interface that is related to a computer operation and that is displayed in a graphical manner. The user interface may be a visual interface element, for example, a text, an icon, a button, a menu, a tab, a text box, a dialog box, a status bar, a navigation bar, or a widget that is displayed on a display of a wearable device.

In some embodiments, a user may edit, in a gallery application, a photo saved in the gallery application. Alternatively, a user may edit, in a Meitu application, a photo saved in a gallery application.

An electronic device may edit the photo, for example, add a filter to the photo, add a text to the photo, add a sticker to the photo, add a special effect to the photo, crop a size of the photo and rotate the photo, adjust photo information, or change a photo background. Adjusting the photo information includes but is not limited to adjusting any one or more of the following information: brightness, contrast, saturation, definition, a color temperature, highlight, shadow, and the like.

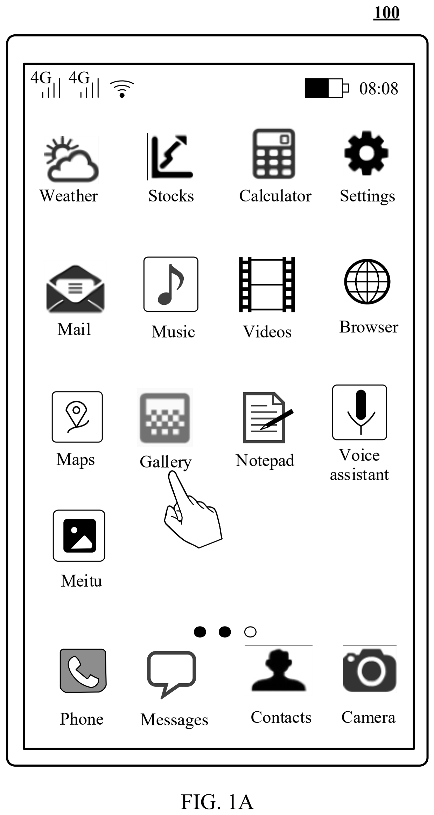

FIG. 1A to FIG. 1K are diagrams of editing, by a user in a gallery application, a photo saved in the gallery application.

FIG. 1A shows a home screen of an electronic device 100. Application icons of a plurality of applications, such as a weather application icon, a stocks application icon, a calculator application icon, a settings application icon, a mail application icon, a music application icon, a videos application icon, a browser application icon, a maps application icon, a gallery application icon, a notepad application icon, a voice assistant application icon, and a Meitu application icon, are displayed in the home screen of the electronic device 100. A page indicator is further displayed below the plurality of application icons, to indicate a total quantity of pages in the home screen and a location relationship between a currently displayed page and another page. For example, the home screen may include three pages, and a white dot in the page indicator may indicate that the currently displayed page is a rightmost page of the three pages. Further, optionally, there are a plurality of dock icons (such as a phone application icon, a messages application icon, a contacts application icon, and a camera application icon) below the page indicator, and the dock icons remain being displayed during page switching. Optionally, a status bar is displayed in a partial upper area of the home screen. The status bar may include one or more signal strength indicators of a mobile communication signal (which may also be referred to as a cellular signal), a battery status indicator, a time indicator, and the like.

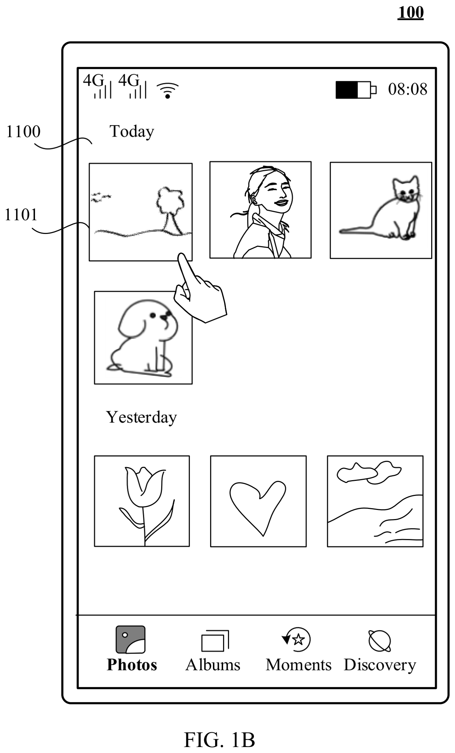

For example, as shown in FIG. 1A, the electronic device 100 may receive an input operation (for example, a tap operation) performed by the user on the gallery application icon in the home screen. In response to the input operation of the user, the electronic device 100 may display a user interface 1100 shown in FIG. 1B. The user interface 1100 is a user interface in which photos displayed on the electronic device 100 are classified by time according to this embodiment of this application. The user interface 1100 shows a plurality of photos, and the plurality of photos include a photo 1101.

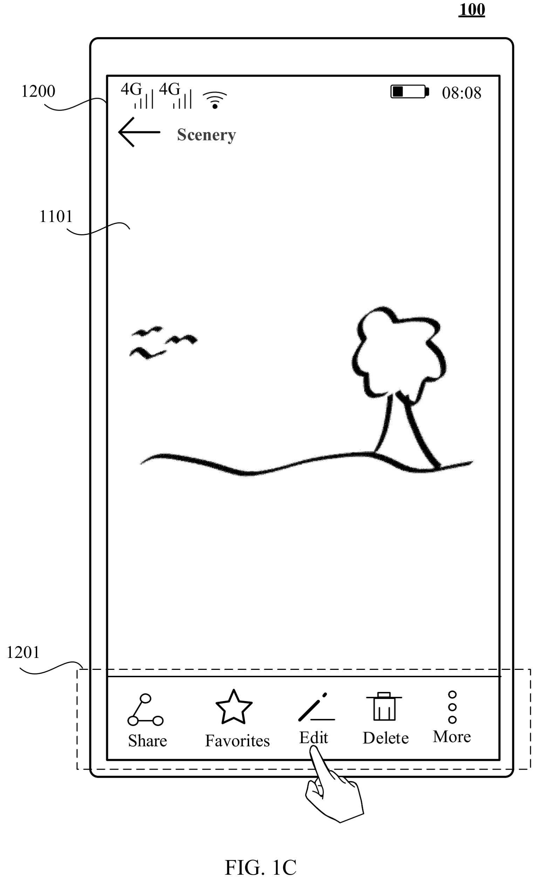

For example, as shown in FIG. 1B, the electronic device 100 may receive an input operation (for example, a tap operation) performed by the user on the photo 1101 in the user interface 1100. In response to the input operation of the user, the electronic device 100 may display a user interface 1200 shown in FIG. 1C.

As shown in FIG. 1C, the user interface 1200 includes the photo 1101 and a menu 1201. The menu 1201 may include a Share button, a Favorites button, an Edit button, a Delete button, and a More button. The photo 1101 may have a title, for example, "Scenery". The Share button may be used to trigger starting of a system sharing interface. The Favorites button may be used to trigger addition of the photo 1101 to a photo favorites folder. The Edit button may be used to trigger editing functions such as rotation, cropping, filter addition, and blurring of the photo 1101. The Delete button may be used to trigger deletion of the photo 1101. The More button may be used to trigger enabling of more functions related to the photo.

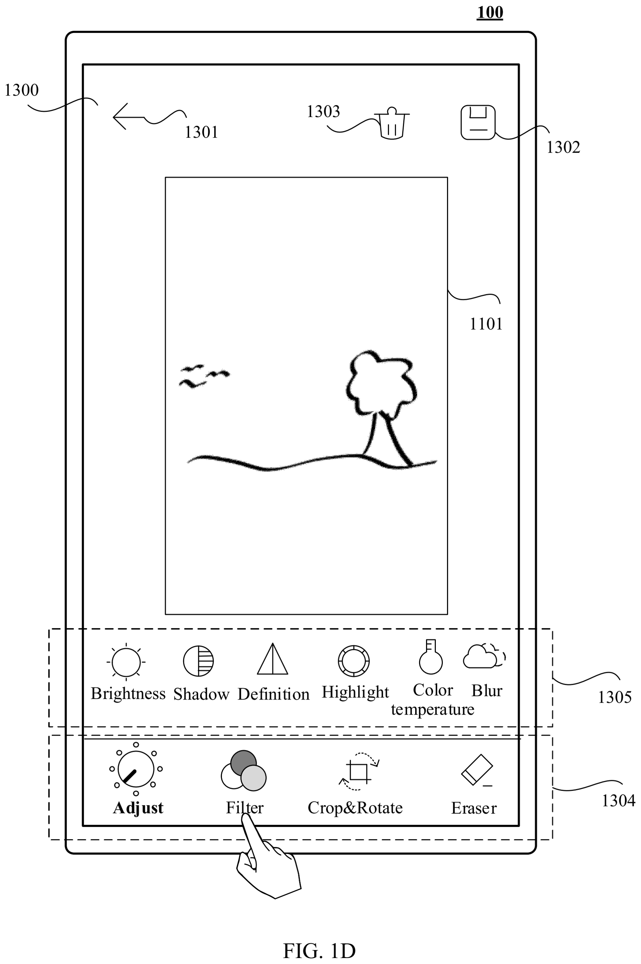

For example, as shown in FIG. 1C, the electronic device 100 may receive an input operation (for example, a tap operation) performed by the user on the Edit button in the user interface 1200. In response to the input operation of the user, the electronic device 100 may display a user interface 1300 shown in FIG. 1D, and the user may edit the photo 1101 in the user interface 1300.

As shown in FIG. 1D, the user interface 1300 includes the photo 1101, a back option 1301, a delete option 1303, a save option 1302, an edit bar 1304, and an edit bar 1305. The edit bar 1304 includes a plurality of editing options, such as an Adjust option, a filter addition option, a Crop&Rotate option, and an Eraser option. The Adjust option is currently selected, and a plurality of editing options shown in the edit bar 1305 are editing options corresponding to the Adjust option. The edit bar 1305 also includes the plurality of editing options, such as a brightness adjustment option, a shadow addition option, a definition adjustment option, a highlight addition option, a color temperature adjustment option, and a blur option. The user may swipe on an area in which the edit bar 1305 is located, to view more other editing options.

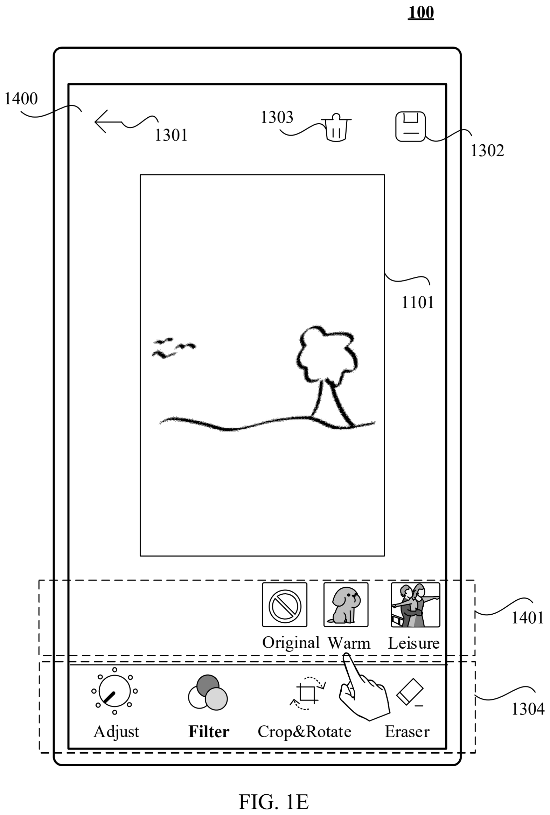

For example, as shown in FIG. 1D, the electronic device 100 may receive an input operation (for example, a tap operation) performed by the user on the filter addition option in the user interface 1300. In response to the input operation of the user, the electronic device 100 may display a user interface 1400 shown in FIG. 1E, and the user may add a filter to the photo 1101 in the user interface 1400. The user interface 1400 includes an edit bar 1401, and a plurality of editing options shown in the edit bar 1401 are editing options corresponding to the filter addition option. The edit bar 1401 also includes the plurality of editing options, such as an option of adding a/no filter, an option of adding a warm filter, and an option of adding a leisure filter. The user may swipe on an area in which the edit bar 1401 is located, to view more other filter options.

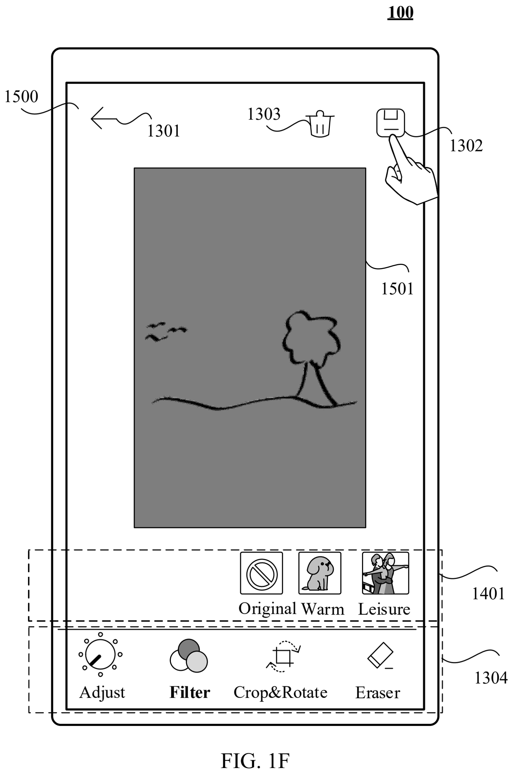

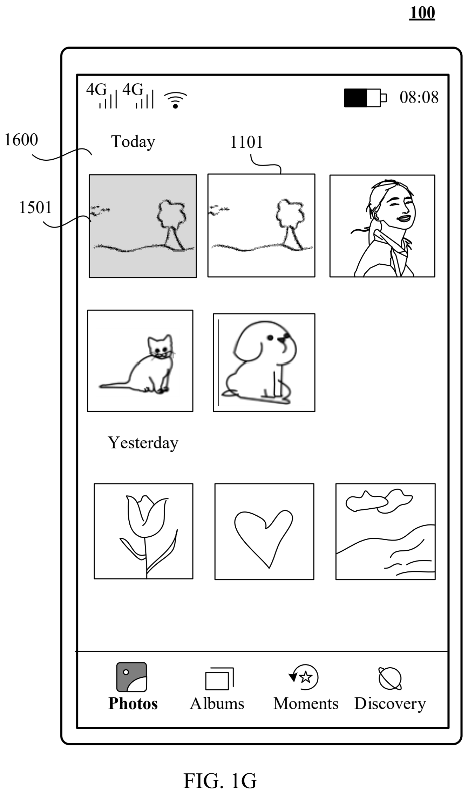

For example, as shown in FIG. 1E, the electronic device 100 may receive an input operation (for example, a tap operation) performed by the user on the option of adding the warm filter in the user interface 1400. In response to the input operation of the user, the electronic device 100 may display a user interface 1500 shown in FIG. 1F. The user interface 1500 includes a photo 1501, and the photo 1501 is a photo obtained by adding the warm filter to the photo 1101. Then, the electronic device 100 may receive an input operation (for example, a tap operation) performed by the user on the save option 1302 in the user interface 1500. In response to the input operation of the user, the electronic device 100 may save the photo 1501, and display a user interface 1600 shown in FIG. 1G. The user interface 1600 is similar to the user interface 1100, and a difference lies in that the user interface 1600 further includes the photo 1501.

In some embodiments, if the user is not satisfied with an editing effect of the photo 1501, the user may re-edit the photo 1101 based on the photo 1101.

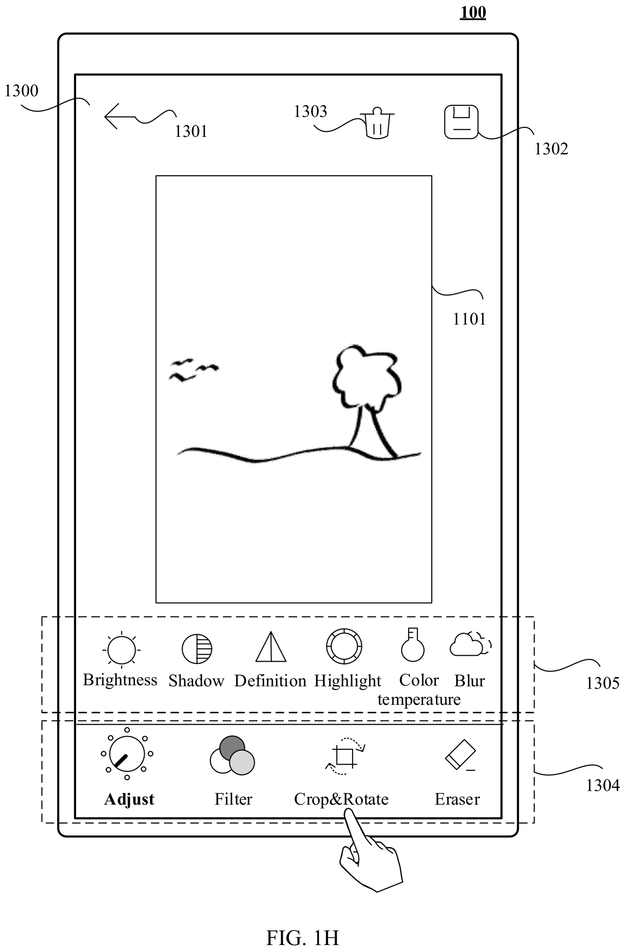

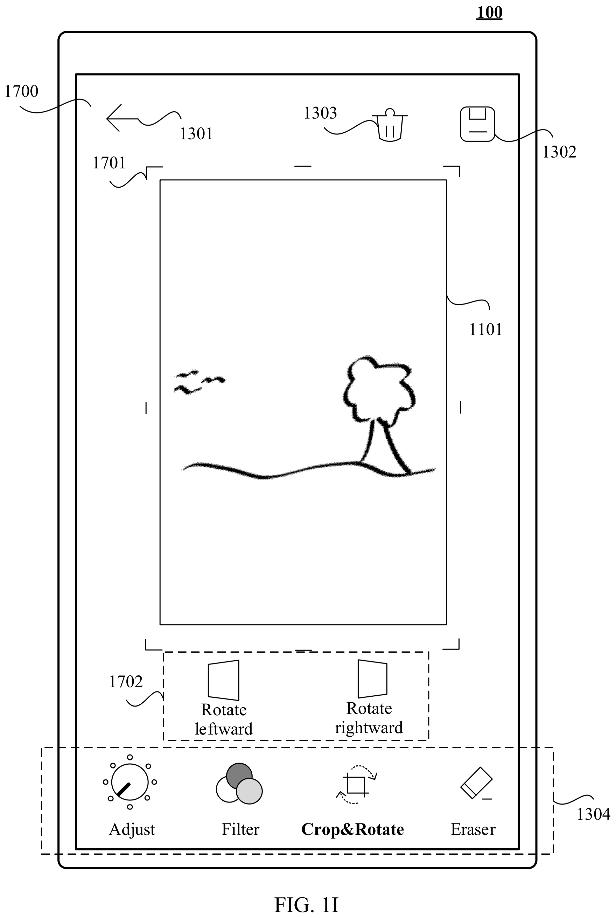

With reference to the descriptions in the embodiments in FIG. 1B and FIG. 1C, when the user needs to re-edit the photo 1101, the electronic device 100 may display the user interface 1300 shown in FIG. 1D. As shown in FIG. 1H, the electronic device 100 may receive an input operation performed by the user on the Crop&Rotate option in the user interface 1300, and display a user interface 1700 shown in FIG. 1I. The user interface 1700 includes a photo cropping box 1701 and a photo rotation option 1702. The user may adjust a size of the photo cropping box 1701, to adjust a size of the photo 1101. The photo rotation option 1702 includes a Rotate leftward option and a Rotate rightward option. The user may rotate the photo 1101 leftward by 90 degrees by using the Rotate leftward option, or the user may rotate the photo 1101 rightward by 90 degrees by using the Rotate rightward option.

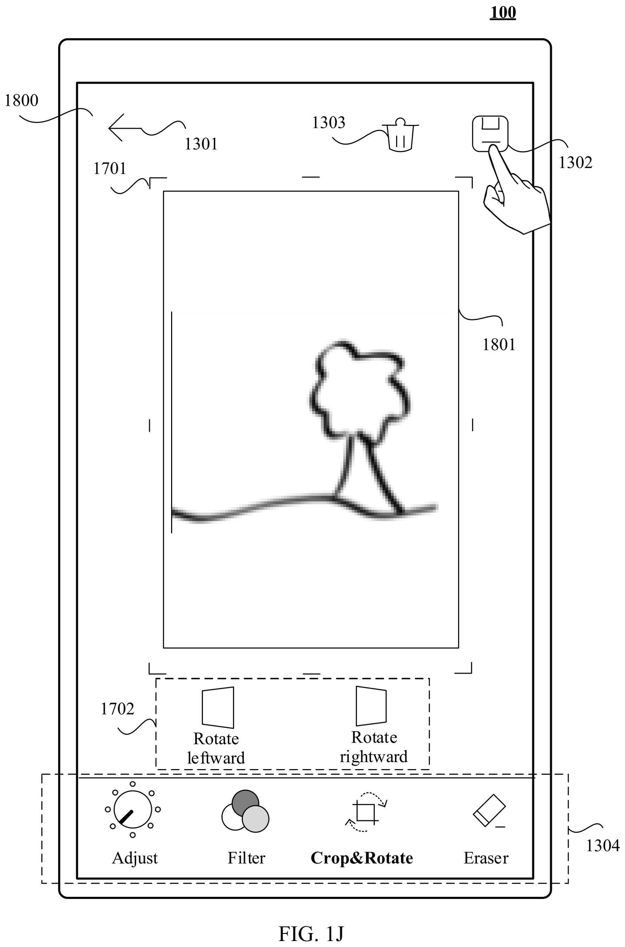

After the electronic device 100 crops the size of the photo 1101 based on a user operation, the electronic device 100 may display a user interface 1800 shown in FIG. 1J.

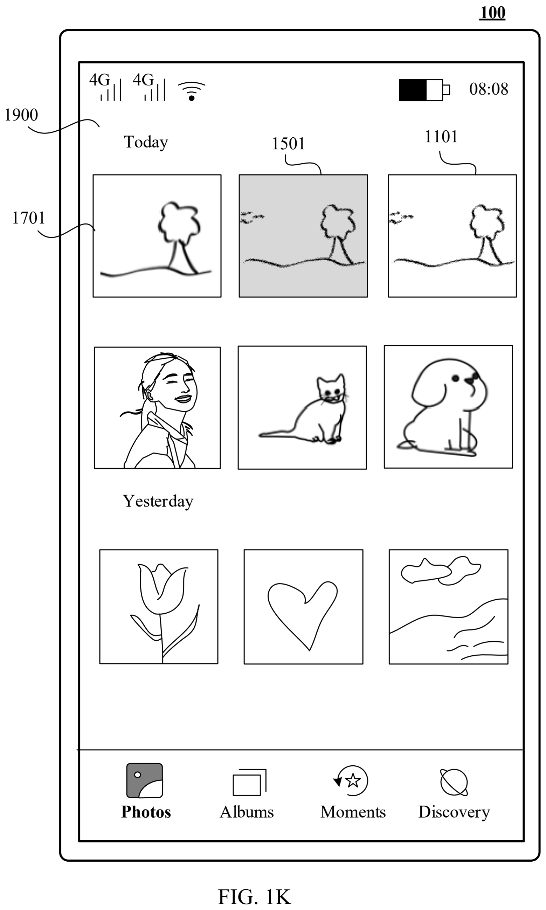

The user interface 1800 includes a photo 1801, and the photo 1801 is a photo obtained by cropping the photo 1101. Then, the electronic device 100 may receive an input operation (for example, a tap operation) performed by the user on the save option 1302 in the user interface 1800. In response to the input operation of the user, the electronic device 100 may save the photo 1801, and display a user interface 1900 shown in FIG. 1K. The user interface 1900 is similar to the user interface 1600, and a difference lies in that the user interface 1800 further includes the photo 1701.

It can be learned from FIG. 1G and FIG. 1K that the user may save the original photo after adding a filter to the photo, and if the user is not satisfied with an editing result of adding the filter, the user only needs to perform a cropping operation on the original photo. The user can perform the cropping operation on the original photo only based on the original photo, and save a cropped photo. The electronic device 100 saves the photo obtained by adding the filter, and saves the photo obtained by performing the cropping operation. The electronic device 100 saves the original photo, and saves the photo obtained by adding the filter and the photo obtained by performing the cropping operation. In other words, there are a plurality of similar photos on the electronic device 100, and storage space of the electronic device 100 are occupied.

According to the foregoing analysis, to improve photo editing efficiency, the electronic device 100 may save an editing record of the photo when the user edits the photo. The editing record of the photo may include one or more editing nodes, and each editing node may include used photo processing algorithm parameter information. Then, when the user re-edits the saved photo, the electronic device 100 may display the editing record of the photo, and revert the photo to any editing node based on a user operation, to re-edit the photo. This improves photo editing efficiency.

Optionally, this application is applicable to photo re-editing, and also applicable to video re-editing and audio re-editing. A specific implementation is similar to a process of re-editing a photo provided in the following embodiments of this application.

First, a photo editing scenario provided in this application is described.
**1. Perform one or more editing operations on a photo, and save an edited photo and an editing record of the photo.**

In some embodiments, the electronic device 100 may perform the one or more editing operations on the photo in a gallery application. In other embodiments, the electronic device 100 may alternatively perform the one or more editing operations on the photo in a Meitu application.

In this embodiment of this application, an example in which the electronic device 100 performs the one or more editing operations on the photo in the gallery application is used for description.

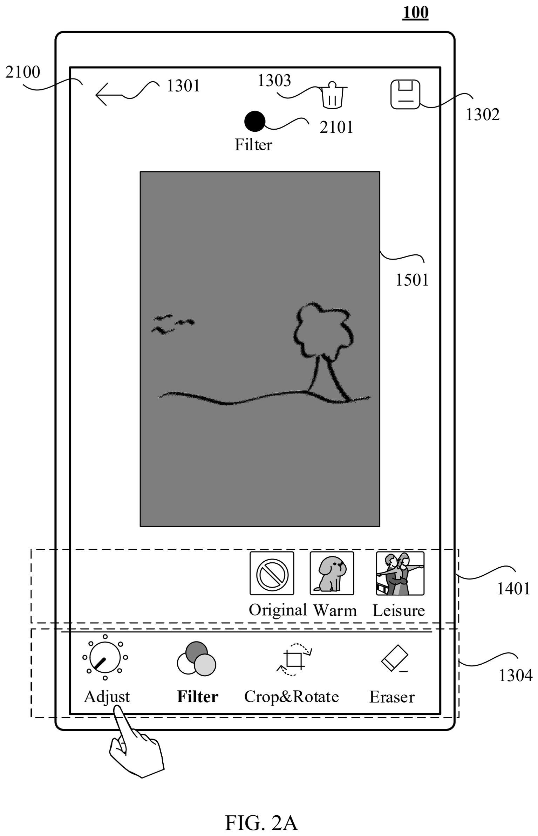

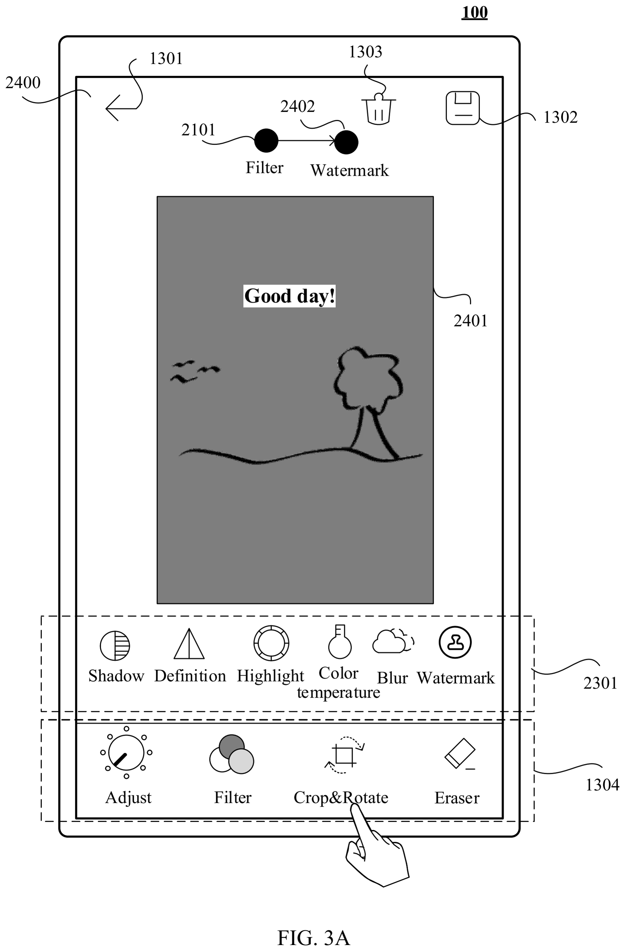

FIG. 2A to FIG. 2D and FIG. 3A to FIG. 3D are diagrams of performing an editing operation on a photo by an electronic device 100.

With reference to the descriptions in the embodiments in FIG. 1A to FIG. 1E, the electronic device 100 may receive a filter addition operation performed by a user on a photo 1101.

For example, as shown in FIG. 2A, in response to an editing operation of adding a warm filter to the photo 1101 performed by the user, the electronic device 100 may display a user interface 2100 shown in FIG. 2A. The user interface 2100 includes a photo 1501, and the photo 1501 is a photo obtained by adding the warm filter to the photo 1101.

An editing node 2101 is further displayed in the user interface 2100, and a text "Filter" is displayed below the editing node 2101, to indicate that the photo 1501 is a photo obtained by performing the filter addition operation.

In some embodiments, the text "Filter" may not be displayed below the editing node 2101.

The electronic device 100 further needs to save an editing record of the photo 1501 and the editing record of the photo 1501. The editing record of the photo 1501 may include photo processing algorithm parameter information 1 used for the photo 1501, and the photo processing algorithm parameter information 1 may include but is not limited to an algorithm processing structure 1 and description information 1 of an algorithm. For example, the algorithm processing structure 1 may include a filter algorithm, and the description information 1 of the algorithm may include description information of the filter algorithm. The description information of the filter algorithm may include but is not limited to an identifier or a name of the filter algorithm, a version of the filter algorithm, a parameter of the filter algorithm, and the like. For example, the parameter of the filter algorithm may be "Warm".

In some embodiments, the user may continue to perform another editing operation on the photo 1501.

For example, the user may add a watermark to the photo 1501.

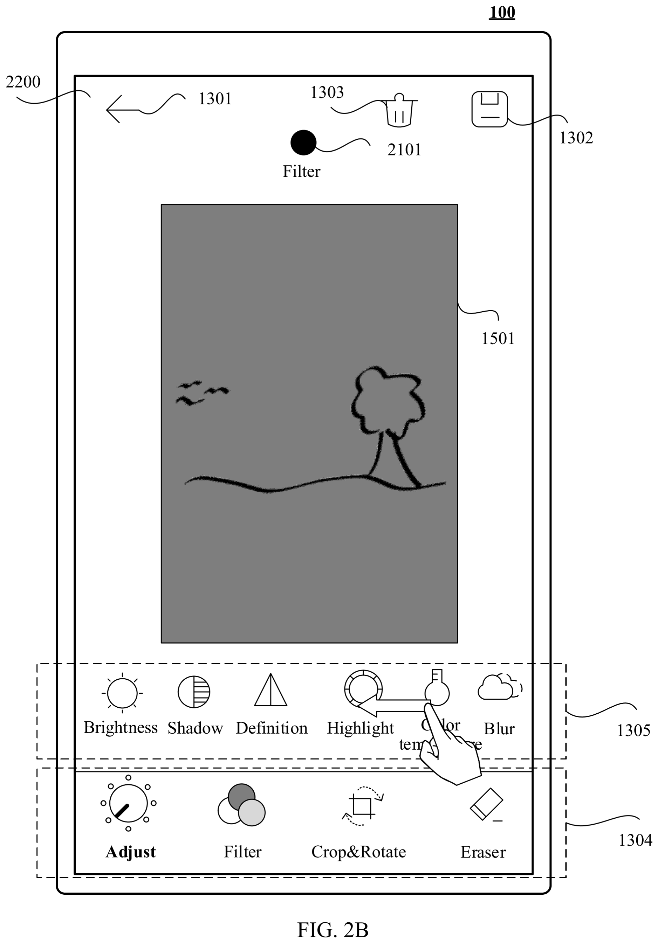

For example, as shown in FIG. 2A, the electronic device 100 may receive an input operation (for example, a tap operation) performed by the user on an Adjust option in the user interface 2100. In response to the input operation of the user, the electronic device 100 may display a user interface 2200 shown in FIG. 2B. The user interface 2200 includes an edit bar 1304 and an edit bar 1305.

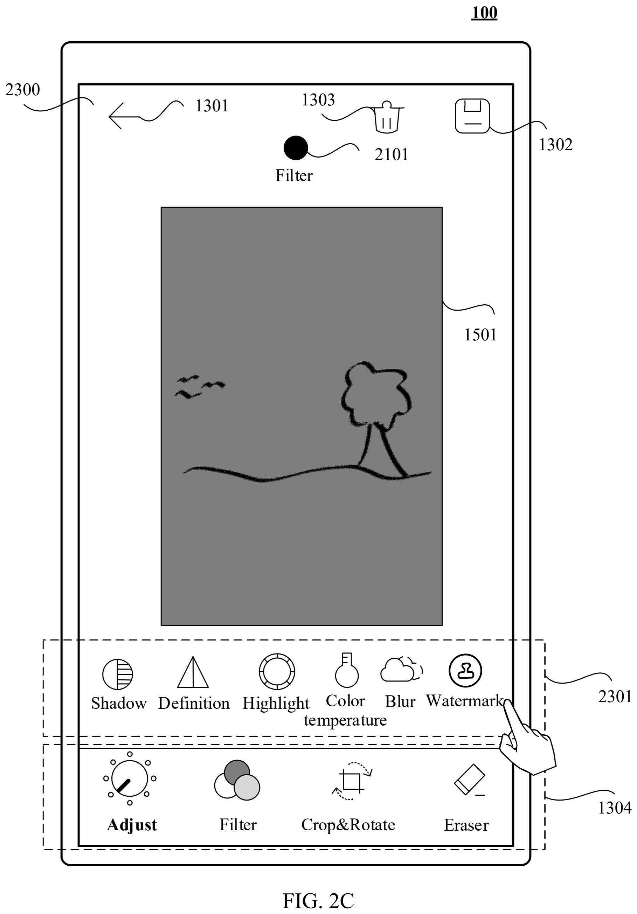

As shown in FIG. 2B, the electronic device 100 may receive a sliding operation (for example, a leftward sliding operation) performed by the user on the edit bar 1304. In response to the sliding operation of the user, the electronic device 100 may display a user interface 2300 shown in FIG. 2C. An edit bar 2301 shown in the user interface 2300 is similar to the edit bar 1305, and a difference lies in that the edit bar 2301 further includes a watermark addition option. The user may add a watermark to the photo 1501 by using the watermark addition option.

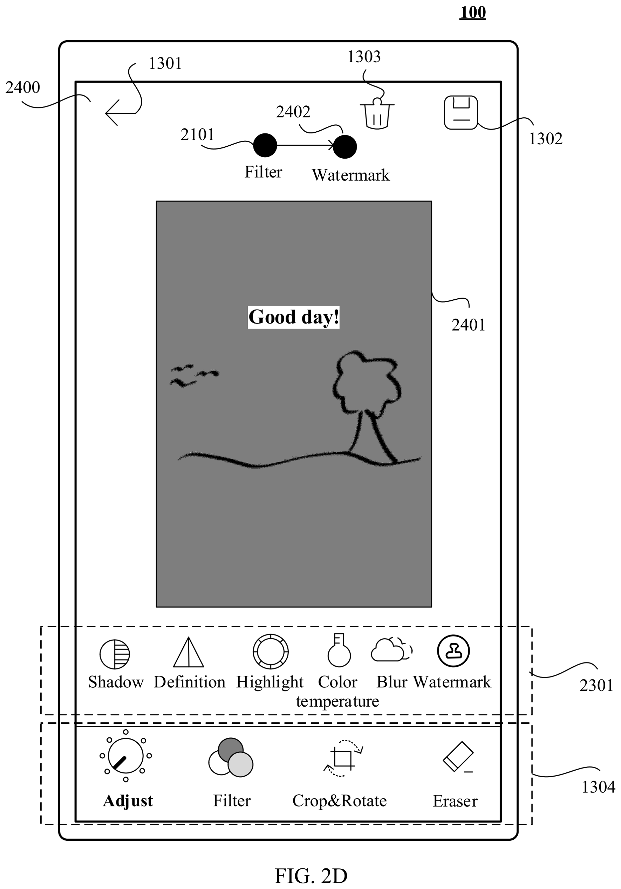

For example, as shown in FIG. 2D, in response to adding a text to the photo 1501, the electronic device 100 may display a user interface 2400 shown in FIG. 2D. The user interface 2400 may include a photo 2401. The photo 2401 is obtained by adding a text "Good day" to the photo 1501.

An editing node 2101 and an editing node 2402 are further displayed in the user interface 2400. The editing node 2101 points to the editing node 2402, to indicate an execution sequence of different photo editing algorithms. A text "Filter" is displayed below the editing node 2101, and a text "Watermark" is displayed below the editing node 2402, to indicate that the photo 2401 is obtained by performing a filter addition operation and a watermark addition operation.

In some embodiments, the text "Watermark" may not be displayed below the editing node 2402.

The electronic device 100 further needs to save an editing record of the photo 2401. The editing record of the photo 2401 may include photo processing algorithm parameter information 2 used for the photo 2401, and the photo processing algorithm parameter information 2 may include but is not limited to an algorithm processing structure 2 and description information 2 of an algorithm. For example, the algorithm processing structure 2 may include that a filter addition algorithm points to a watermark addition algorithm, and the description information 2 of the algorithm may include description information of the filter addition algorithm and description information of the watermark addition algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day".

In some embodiments, the user may further continue to perform another editing operation on the photo 2401.

For example, the user may crop the photo 2401.

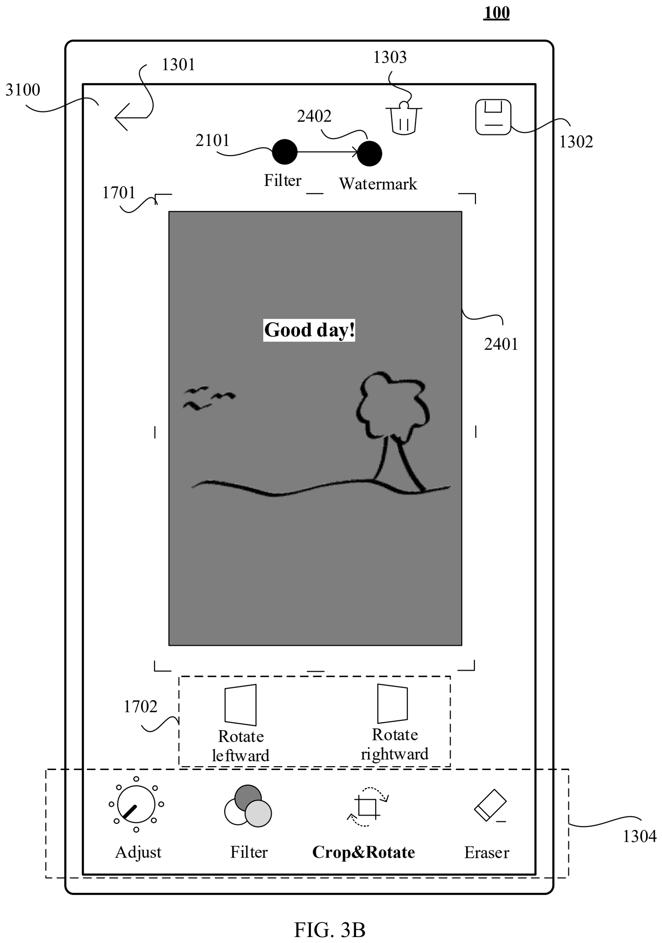

As shown in FIG. 3A, the electronic device 100 may receive an input operation performed by the user on a Crop&Rotate option in the user interface 2400, and display a user interface 3100 shown in FIG. 3B. The user interface 3100 includes a photo cropping box 1701 and a photo rotation option 1702. The user may adjust a size of the photo cropping box 1701, to adjust a size of the photo 2401. The photo rotation option 1702 includes a Rotate leftward option and a Rotate rightward option. The user may rotate the photo 2401 leftward by 90 degrees by using the Rotate leftward option, or the user may rotate the photo 2401 rightward by 90 degrees by using the Rotate rightward option.

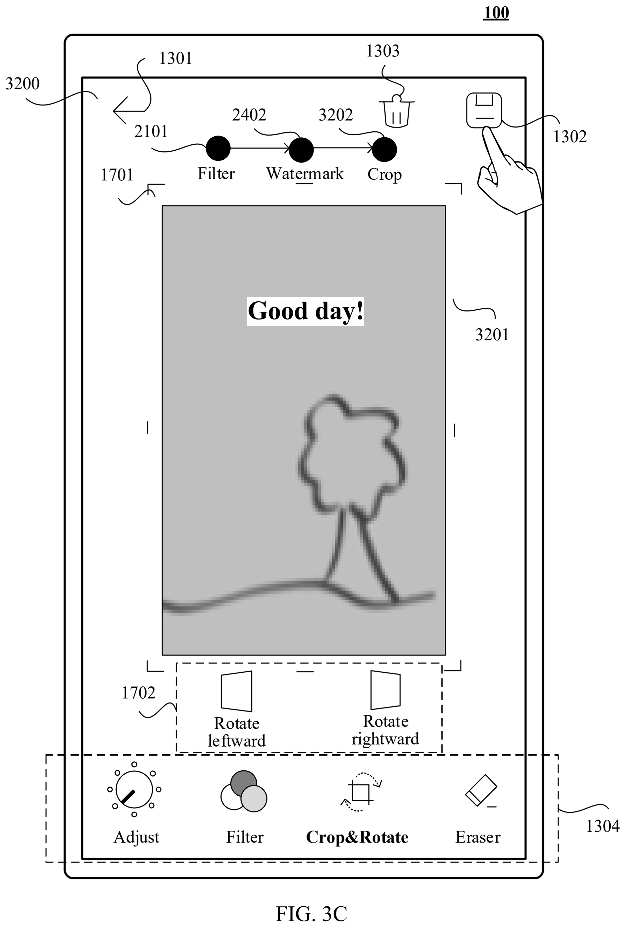

After the electronic device 100 crops the size of the photo 2401 based on a user operation, the electronic device 100 may display a user interface 3200 shown in FIG. 3C.

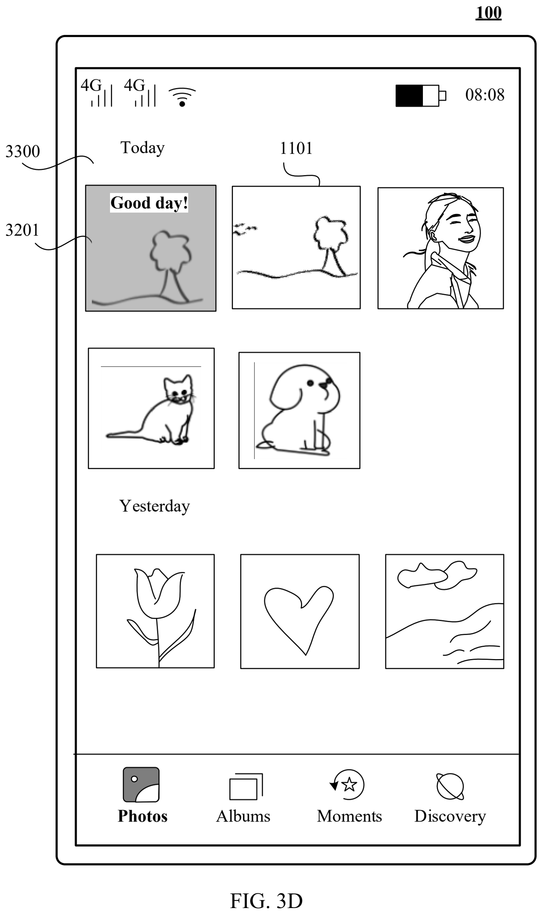

The user interface 3200 includes a photo 3201, and the photo 3201 is a photo obtained by cropping the photo 2401. Then, the electronic device 100 may receive an input operation (for example, a tap operation) performed by the user on a save option 1302 in the user interface 3200. In response to the input operation of the user, the electronic device 100 may save the photo 3201, and display a user interface 3300 shown in FIG. 3D. The user interface 3300 is similar to the user interface 1600, and a difference lies in that the user interface 3300 further includes the photo 3201. The photo 3201 is a photo obtained by sequentially performing a filter addition operation, a watermark addition operation, and a cropping operation on the photo 1101.

An editing node 2101, an editing node 2402, and an editing node 3202 are further displayed in the user interface 3200. The editing node 2101, the editing node 2402, and the editing node 3202 indicate an execution sequence of different photo editing algorithms. A text "Filter" is displayed below the editing node 2101, a text "Watermark" is displayed below the editing node 2402, and a text "Crop" is displayed below the editing node 3202, to indicate that the photo 3201 is obtained by performing the filter addition operation, the watermark addition operation, and the cropping operation.

In some embodiments, the text "Crop" may not be displayed below the editing node 3202.

The electronic device 100 further needs to save an editing record of the photo 3201. The editing record of the photo 3201 may include photo processing algorithm parameter information 3 used for the photo 3201, and the photo processing algorithm parameter information 3 may include but is not limited to an algorithm processing structure 3 and description information 3 of an algorithm. For example, the algorithm processing structure 3 may include that a filter addition algorithm points to a watermark addition algorithm, and the watermark addition algorithm points to a cropping algorithm. The description information 3 of the algorithm may include description information of the filter addition algorithm, description information of the watermark addition algorithm, and description information of the cropping algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day". The description information of the cropping algorithm may include but is not limited to an identifier or a name of the cropping algorithm, a version of the cropping algorithm, a parameter of the cropping algorithm, and the like. For example, the parameter of the cropping algorithm may be a size of a cropping box.

In addition to performing the filter addition operation, the watermark addition operation, and the cropping operation on the photo 1101, the electronic device 100 may further perform another editing operation on the photo 1101 based on a user operation. This is not limited in this application either.

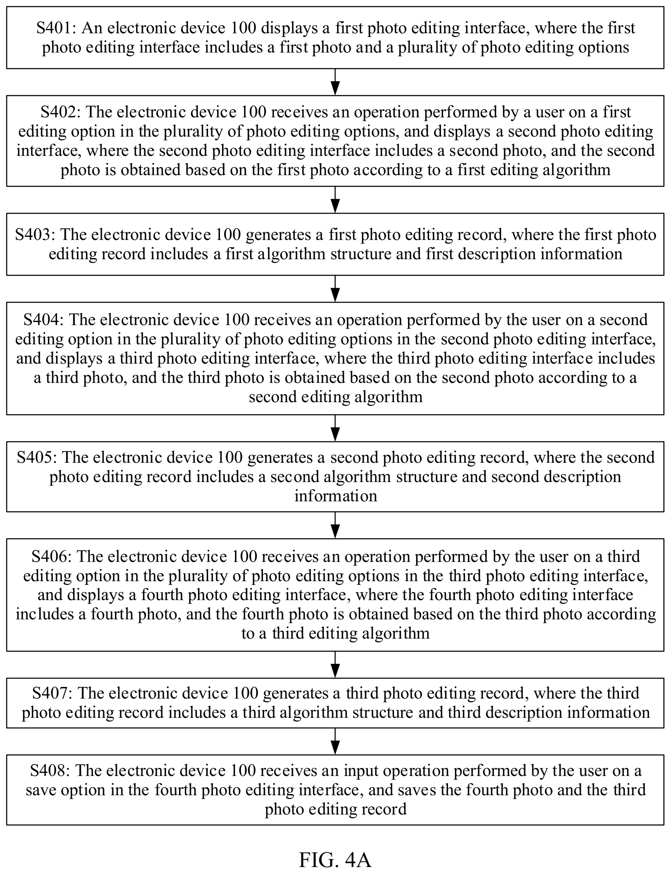

**FIG. 4A** **is a schematic flowchart of a photo editing method according to this application.**

S401: An electronic device 100 displays a first photo editing interface, where the first photo editing interface includes a first photo and a plurality of photo editing options.

The first photo editing interface may be a photo editing interface in a gallery application, or the first photo editing interface may be a photo editing interface in a Meitu application. This is not limited in this application.

In this embodiment of this application, an example in which the first photo editing interface is the photo editing interface in the gallery application is used for description.

A user may edit or beautify the first photo by using the plurality of photo editing options. Editing or beautifying the photo may be adding a filter to the photo, adding a text to the photo, adding a sticker to the photo, adding a special effect to the photo, cropping a size of the photo and rotating the photo, adjusting photo information, changing a photo background, and the like. Adjusting the photo information includes but is not limited to adjusting any one or more of the following information: brightness, contrast, saturation, definition, a color temperature, highlight, shadow, and the like.

For example, the first photo editing interface may be the user interface 1300 shown in FIG. 1D.

The first photo may be the photo 1101 shown in FIG. 1D.

The photo editing options may include but is not limited to the plurality of editing options in the edit bar 1304 and the plurality of editing options in the edit bar 1305 shown in FIG. 1D.

S402: The electronic device 100 receives an operation performed by the user on a first editing option in the plurality of photo editing options, and displays a second photo editing interface, where the second photo editing interface includes a second photo, and the second photo is obtained based on the first photo according to a first editing algorithm.

For example, the first editing option may be the option of adding the warm filter shown in FIG. 1E. The first editing algorithm may be a warm filter addition algorithm.

The operation performed on the first editing option in the plurality of photo editing options may be the input operation (for example, the tap operation) performed on the option of adding the warm filter in the user interface 1400 shown in FIG. 1E.

The second photo editing interface may be the user interface 2100 shown in FIG. 2A.

The second photo may be the photo 1501 shown in FIG. 2A.

S403: The electronic device 100 generates a first photo editing record, where the first photo editing record includes a first algorithm structure and first description information.

In response to the operation performed by the user on the first photo editing option in the plurality of photo editing options, the electronic device 100 generates the first photo editing record, where the first photo editing record includes the first algorithm structure and the first description information.

The first algorithm structure indicates types of photo editing algorithms used for the second photo and a sequence of the photo editing algorithms used for the second photo.

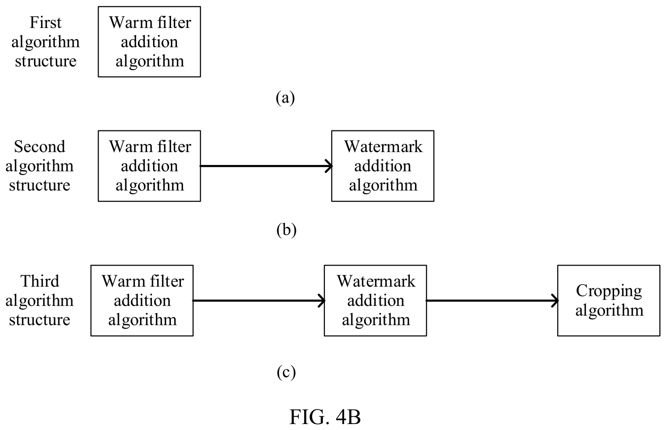

For example, the first algorithm structure may be an algorithm structure shown in (a) in FIG. 4B. The warm filter addition algorithm may be a root node of the first algorithm structure.

The first description information indicates description information of a first editing algorithm used for the second photo.

For example, the first editing algorithm may be a filter algorithm, and description information of the filter algorithm may include but is not limited to an identifier or a name of the filter algorithm, a version of the filter algorithm, a parameter of the filter algorithm, and the like. For example, the parameter of the filter algorithm may be "Warm".

In some embodiments, after the electronic device 100 generates a photo editing record, the electronic device 100 may compress the photo editing record and then save the photo editing record, to save storage space occupied by the photo editing record. A compression algorithm may include but is not limited to any one of the following: an RLE compression algorithm, an LZ77 compression algorithm, an LZR compression algorithm, a DEFLATE compression algorithm, and the like.

In some embodiments, the electronic device 100 may save the photo editing record based on a preset file format. For example, in this embodiment of this application, the preset file format may be referred to as a TBP file format.

**Table 1**

| Segment | Code | Description information |
|---|---|---|
| SOI | CAFE | Start of a photo |
| TBP-APP 0 | Original metadata of the photo | Photo information that describes an original photo |
| TBP-APP 1 | Storage address of a compressed original photo | Storage address of the original photo on which an edit operation is not performed |
| TBP-APP 2 | Updated metadata of the photo | Photo information of the photo obtained by performing the edit operation on the original photo |
| GPH 0 | Photo editing algorithm structure table | Record an execution sequence of executed photo editing algorithms |
| GPH 1 | Photo editing algorithm A | Identifier of the photo editing algorithm A |
| GPH 2 | Photo editing algorithm B | Identifier of the photo editing algorithm B |
| GPH 3 | Photo editing algorithm C | Identifier of the photo editing algorithm C |
| | ... | ... |
| GPH 4 | Storage address of a compressed updated photo | Storage address of the original photo on which the edit operation has been performed |
| EOI | CAFD | End of the photo |

Table 1 shows a composition structure of the TBP file format.

As shown in Table 1, the TBP file format includes but is not limited to the SOI segment, one or more TBP-APP segments, one or more GPH segments, the EOI segment, and the like.

The SOI segment is used to fill in CA FE, and the SOI segment indicates the start of the photo.

The one or more TBP-APP segments may include but are not limited to the TBP-APP 0 segment, the TBP-APP 1 segment, and the TBP-APP 2 segment. The TBP-APP 0 segment is used to fill in the original metadata of the photo, and the TBP-APP 0 segment indicates the photo information that describes the original photo. The TBP-APP 1 segment is used to fill in the storage address of the compressed original photo, and the TBP-APP 1 segment indicates the storage address of the original photo on which the edit operation is not performed. The TBP-APP 2 segment is used to fill in the updated metadata of the photo, and the TBP-APP 2 segment indicates the photo information of the photo obtained by performing the editing operation on the original photo.

The one or more GPH segments may include but are not limited to the GPH 0 segment, the GPH 1 segment, the GPH 2 segment, the GPH 3 segment, the GPH 4 segment, and the like. The GPH 0 segment is used to fill in the photo editing algorithm structure table, and the GPH 0 segment indicates the execution sequence of the executed photo editing algorithms. The GPH 1 segment is used to fill in the photo editing algorithm A, and the GPH 1 segment indicates the identifier of the photo editing algorithm A. The GPH 2 segment is used to fill in the photo editing algorithm B, and the GPH 2 segment indicates the identifier of the photo editing algorithm B. The GPH 3 segment is used to fill in the photo editing algorithm C, and the GPH 3 segment indicates the identifier of the photo editing algorithm C. The GPH 4 segment is used to fill in the storage address of the compressed updated photo, and the GPH 4 segment indicates the storage address of the original photo on which the edit operation has been performed.

The EOI segment is used to fill in CA FD, and the EOI segment indicates the end of the photo.

It should be noted that, as different types of photo editing algorithms are used for the photo, more or fewer GPH segments may be included. A quantity of GPH segments is not limited in this application.

In some embodiments, a data structure of the TBP file format may further include more or fewer fields than those in Table 1. This is not limited in this application.

For example, with reference to the descriptions in the embodiments in FIG. 1D to FIG. 1F, after the electronic device 100 adds the "Warm" filter to the photo 1101 based on a user operation, the electronic device 100 may record an identifier of the "Warm" filter addition algorithm in the GPH 1 segment in Table 1.

For example, with reference to the descriptions in the embodiments in FIG. 2C and FIG. 2D, after the electronic device 100 adds the "Good day" text watermark to the photo 1501 based on a user operation, the electronic device 100 may record an identifier of adding the "Good day" text watermark in the GPH 2 segment in Table 1.

For example, with reference to the descriptions in the embodiments in FIG. 3A to FIG. 3C, after the electronic device 100 crops the photo 2401 based on a user operation, the electronic device 100 may record an identifier of a cropping algorithm in the GPH 3 segment in Table 1.

In some embodiments, the photo editing algorithm structure table in the TBP file format may be represented as a data structure shown in Table 2.

**Table 2**

| Segment | Code | Description information |
|---|---|---|
| SOT 0 | CAFO | Start of a photo editing algorithm structure |
| SOT 1 | Length of a data segment of a photo editing algorithm | Length of the data segment of the photo editing algorithm |
| CPS | Compression bit flag | Type of a compression algorithm and whether the photo is compressed |
| GPI 0 | Node diagram structure of the photo editing algorithm | Photo editing algorithm A->Photo editing algorithm B->Photo editing algorithm C |
| GPI 1 | Data structure fat pointer of the photo editing algorithm A | Offset location and length of the photo editing algorithm A |
| GPI 2 | Data structure fat pointer of the photo editing algorithm B | Offset location and length of the photo editing algorithm B |
| GPI 3 | Data structure fat pointer of the photo editing algorithm C | Offset location and length of the photo editing algorithm C |
| EOT | CAF1 | End of the photo editing algorithm structure |

Table 2 illustrates a data structure of the editing algorithm structure table.

As shown in Table 2, the data structure may include a plurality of fields, such as the SOT 0 segment, the SOT 1 segment, the CPS segment, one or more GPI segments, and the EOT segment.

The SOT 0 segment is used to fill in CA FO, where CA FO indicates the start of the photo editing algorithm structure.

The SOT 1 segment is used to fill in the length of the data segment of the photo editing algorithm, and the SOT 1 segment indicates the length of the data segment of the photo editing algorithm.

The CPS segment is used to fill in the compression bit flag, and the CPS segment indicates the type of the compression algorithm and whether the photo is compressed.

The one or more GPI segments may include but are not limited to the GPI 0 segment, the GPI 1 segment, the GPI 2 segment, and the GPI 3 segment. The GPI 0 segment is used to fill in the node diagram structure of the photo editing algorithm, and the GPI 0 segment may be represented as photo editing algorithm A->photo editing algorithm B->photo editing algorithm C, to indicate that the photo editing algorithm A, the photo editing algorithm B, and the photo editing algorithm C are sequentially used for the photo. The GPI 1 segment is used to fill in the data structure fat pointer of the photo editing algorithm A, and the GPI 1 segment indicates the offset location and the length of the photo editing algorithm A. The GPI 2 segment is used to fill in the data structure fat pointer of the photo editing algorithm B, and the GPI 2 segment indicates the offset location and the length of the photo editing algorithm B. The GPI 3 segment is used to fill in the data structure fat pointer of the photo editing algorithm C, and the GPI 3 segment indicates the offset location and the length of the photo editing algorithm C.

The EOT segment is used to fill in CA F1, where CA F1 indicates the end of the photo editing algorithm structure.

It should be noted that, as different types of photo editing algorithms are used for the photo, more or fewer GPI segments may be included. A quantity of GPH segments is not limited in this application.

In some embodiments, the data structure of the photo editing algorithm structure table may further include more or fewer fields than those in Table 2. This is not limited in this application.

For example, with reference to the descriptions in the embodiments in FIG. 1D to FIG. 1F, after the electronic device 100 adds the "Warm" filter to the photo 1101 based on a user operation, the electronic device 100 may record a pointer of description information of the "Warm" filter addition algorithm in the GPI 1 segment in Table 2.

For example, with reference to the descriptions in the embodiments in FIG. 2C and FIG. 2D, after the electronic device 100 adds the "Good day" text watermark to the photo 1501 based on a user operation, the electronic device 100 may record a pointer of description information of the "Good day" text addition algorithm in the GPI 2 segment in Table 2.

For example, with reference to the descriptions in the embodiments in FIG. 3A to FIG. 3C, after the electronic device 100 crops the photo 2401 based on a user operation, the electronic device 100 may record a pointer of description information of a cropping algorithm in the GPH 3 segment in Table 2.

In some embodiments, the data structure fat pointer of the photo editing algorithm in the photo editing algorithm structure table may be represented as a data structure shown in Table 3.

**Table 3**

| Segment | Code | Description information |
|---|---|---|
| SOA | CA F2 | Start of a photo editing algorithm packaging structure |
| VER | Version of a photo editing algorithm and type of the photo editing algorithm | Version of the photo editing algorithm and type of the photo editing algorithm: deterministic algorithm and non-deterministic algorithm |
| STR | Name of the photo editing algorithm | Name of the photo editing algorithm |
| TPE | Input parameter photo format of the photo editing algorithm | Input parameter data type of the photo editing algorithm |
| PAR | Input parameter group of the photo editing algorithm | Parameters of the photo editing algorithm |
| AVR | Version code of the photo editing algorithm | Version of the photo editing algorithm |
| VDR | Provider of the photo editing algorithm | Provider of the photo editing algorithm |
| ADR | Length of a data file segment of the photo editing algorithm | Length of the data file segment of the photo editing algorithm |
| CPX | Complexity of the photo editing algorithm | Complexity of the photo editing algorithm |
| FIL | Storage location of an input parameter data file of the photo editing algorithm | Storage location of the input parameter data file of the photo editing algorithm |
| EOA | CA F3 | End of the photo editing algorithm packaging structure |

Table 3 illustrates a data structure of the data structure fat pointer of the photo editing algorithm.

As shown in Table 3, the data structure may include a plurality of fields, such as the SOA segment, the VER segment, the STR segment, the TPE segment, the PAR segment, the AVR segment, the VDR segment, the ADR segment, the CPX segment, the FIL segment, and the EOA segment.

The SOA segment is used to fill in CA F2, where CA F2 indicates the start of the photo editing algorithm packaging structure.

The VER segment is used to fill in the version of the photo editing algorithm and the type of the photo editing algorithm. The VER segment indicates the version of the photo editing algorithm and the type of the photo editing algorithm. The type of the algorithm may include the deterministic algorithm or the non-deterministic algorithm.

The STR segment is used to fill in the name of the photo editing algorithm, and the STR segment indicates the name of the photo editing algorithm.

The TPE segment is used to fill in the input parameter photo format of the photo editing algorithm, and the TPE segment indicates the input parameter data type of the photo editing algorithm.

The PAR segment is used to fill in the input parameter group of the photo editing algorithm, and the PAR segment indicates the parameters of the photo editing algorithm.

For example, with reference to the descriptions in the embodiments in FIG. 1D to FIG. 1F, after the electronic device 100 adds the "Warm" filter to the photo 1101 based on a user operation, the electronic device 100 may record description information of the "Warm" filter addition algorithm in a plurality of segments in Table 3. For example, the electronic device 100 may record a parameter "Warm" of the "Warm" filter addition algorithm in the PAR segment in Table 3.

For example, with reference to the descriptions in the embodiments in FIG. 2C and FIG. 2D, after the electronic device 100 adds the "Good day" text watermark to the photo 1501 based on a user operation, the electronic device 100 may record description information of the "Good day" text addition algorithm in a plurality of segments in Table 3. For example, the electronic device 100 may record a parameter "Good day" of the "Good day" text addition algorithm in the PAR segment in Table 3.

For example, with reference to the descriptions in the embodiments in FIG. 3A to FIG. 3C, after the electronic device 100 crops the photo 2401 based on a user operation, the electronic device 100 may record description information of a cropping algorithm in a plurality of segments in Table 3. For example, the electronic device 100 may record a parameter "Size of the cropping box" of the cropping algorithm in the PAR segment in Table 3. The AVR segment is used to fill in the version code of the photo editing algorithm, and the AVR segment indicates the version of the photo editing algorithm.

The VDR segment is used to fill in the provider of the photo editing algorithm, and the VDR segment indicates the provider of the photo editing algorithm.

The ADR segment is used to fill in the length of the data file segment of the photo editing algorithm, and the ADR segment indicates the length of the data file segment of the photo editing algorithm.

The CPX segment is used to fill in the complexity of the photo editing algorithm, and the CPX segment indicates the complexity of the photo editing algorithm.

The FIL segment is used to fill in the storage location of the input parameter data file of the photo editing algorithm, and the FIL segment indicates the storage location of the input parameter data file of the photo editing algorithm.

The EOA segment is used to fill in CA F3, where CA F3 indicates the end of the photo editing algorithm packaging structure.

In some embodiments, the data structure of the data structure fat pointer of the photo editing algorithm may not include the VDR segment, the ADR segment, the CPX segment, the FIL segment, and the like.

In some embodiments, the data structure of the data structure fat pointer of the photo editing algorithm may further include more or fewer fields than those in Table 3. This is not limited in this application.

S404: The electronic device 100 receives an operation performed by the user on a second editing option in the plurality of photo editing options in the second photo editing interface, and displays a third photo editing interface, where the third photo editing interface includes a third photo, and the third photo is obtained based on the second photo according to a second editing algorithm.

For example, the second editing option may be the watermark addition option shown in FIG. 2C. The second editing algorithm may be a watermark addition algorithm.

The operation performed on the second editing option in the plurality of photo editing options may be the input operation (for example, the tap operation) performed on the watermark addition option in the user interface 2300 shown in FIG. 2C.

The third photo editing interface may be the user interface 2400 shown in FIG. 2D.

The third photo may be the photo 2401 shown in FIG. 2D.

S405: The electronic device 100 generates a second photo editing record, where the second photo editing record includes a second algorithm structure and second description information.

In response to the operation performed by the user on the second editing option in the plurality of photo editing options, the electronic device 100 generates the second photo editing record, where the second photo editing record includes the second algorithm structure and the second description information.

The second algorithm structure indicates types of photo editing algorithms used for the third photo and a sequence of the photo editing algorithms used for the third photo.

For example, the second algorithm structure may be an algorithm structure shown in (b) in FIG. 4B. The watermark addition algorithm may be a child node of the warm filter addition algorithm.

The second description information indicates description information of a first editing algorithm and description information of a second editing algorithm that are used for the third photo.

For example, the first editing algorithm may be a filter addition algorithm, and description information of the first editing algorithm may include but is not limited to an identifier or a name of the filter algorithm, a version of the filter algorithm, a parameter of the filter algorithm, and the like. For example, the parameter of the filter algorithm may be "Warm".

For example, the second editing algorithm may be a watermark addition algorithm, and description information of the second editing algorithm may include but is not limited to an identifier or a name of the watermark addition algorithm, a version of the watermark addition algorithm, a parameter of the watermark addition algorithm, and the like. For example, the parameter of the watermark addition algorithm may be "Good day".

Optionally, the electronic device 100 may not perform S404 and S405.

S406: The electronic device 100 receives an operation performed by the user on a third editing option in the plurality of photo editing options in the third photo editing interface, and displays a fourth photo editing interface, where the fourth photo editing interface includes a fourth photo, and the fourth photo is obtained based on the third photo according to a third editing algorithm.

For example, the third editing option may be the Crop&Rotate option shown in FIG. 3A. The third editing algorithm may be a cropping algorithm.

The operation performed on the third editing option in the plurality of photo editing options may be the input operation (for example, the tap operation) performed on the Crop&Rotate option in the user interface 2400 shown in FIG. 3A.

The fourth photo editing interface may be the user interface 3200 shown in FIG. 3C.

The fourth photo may be the photo 3201 shown in FIG. 3C.

S407: The electronic device 100 generates a third photo editing record, where the third photo editing record includes a third algorithm structure and third description information.

In response to the operation performed by the user on the third editing option in the plurality of photo editing options, the electronic device 100 generates the third photo editing record, where the third photo editing record includes the third algorithm structure and the third description information.

The third algorithm structure indicates types of photo editing algorithms used for the fourth photo and a sequence of the photo editing algorithms used for the fourth photo.

For example, the fourth algorithm structure may be an algorithm structure shown in (c) in FIG. 4B. The cropping algorithm may be a child node of the watermark addition algorithm, and the watermark addition algorithm may be a child node of the warm filter addition algorithm.

The third description information indicates description information of a first editing algorithm, description information of a second editing algorithm, and description information of a third editing algorithm that are used by the fourth photo.

For example, the first editing algorithm may be a filter addition algorithm, and description information of the first editing algorithm may include but is not limited to an identifier or a name of the filter algorithm, a version of the filter algorithm, a parameter of the filter algorithm, and the like. For example, the parameter of the filter algorithm may be "Warm".

For example, the second editing algorithm may be a watermark addition algorithm, and description information of the second editing algorithm may include but is not limited to an identifier or a name of the watermark addition algorithm, a version of the watermark addition algorithm, a parameter of the watermark addition algorithm, and the like. For example, the parameter of the watermark addition algorithm may be "Good day".

For example, the third editing algorithm may be a cropping algorithm, and description information of the cropping algorithm may include but is not limited to an identifier or a name of the watermark addition algorithm, a version of the watermark addition algorithm, a parameter of the watermark addition algorithm, and the like. For example, the parameter of the cropping algorithm may be a size of a cropping box.

Optionally, the electronic device 100 may not perform S406 and S407.

S408: The electronic device 100 receives an input operation performed by the user on a save option in the fourth photo editing interface, and saves the fourth photo and the third photo editing record.

For example, the save option may be the save option 1302 shown in FIG. 3C. The input operation performed by the user on the save option in the fourth photo editing interface may be the input operation (for example, the tap operation) performed by the user on the save option 1302 in the user interface 3200.

In response to the input operation performed by the user on the save option in the fourth photo editing interface, the electronic device 100 may save the fourth photo and the third photo editing record.

**2. Re-edit the edited photo, and save a re-edited photo.**

After the electronic device 100 saves the photo 3201, the electronic device 100 may simultaneously save a photo editing record corresponding to the photo 3201. The photo editing record may include a photo editing algorithm structure and description information of an algorithm that correspond to the photo 3201. The photo editing algorithm structure includes a plurality of editing nodes, where each node corresponds to one photo editing algorithm. Then, when the user re-edits the saved photo, the electronic device 100 may display the photo editing algorithm structure corresponding to the photo 3201, and revert the photo to any editing node based on a user operation, to re-edit the photo. This improves photo editing efficiency.

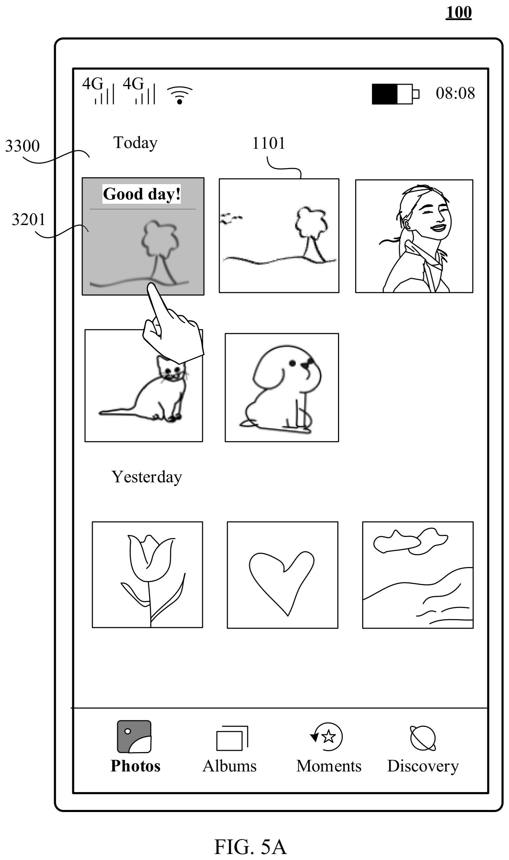

**FIG. 5A to FIG. 5S** **are diagrams of re-editing a photo 3201 by an electronic device 100 based on a user operation.**

With reference to the descriptions in the embodiments in FIG. 3C and FIG. 3D, after the electronic device 100 saves the edited photo 3201 based on the user operation, the electronic device 100 may display a user interface 3300 shown in FIG. 3D. The user interface 3300 includes the photo 3201. The photo 3201 is a photo obtained by sequentially performing a filter addition operation, a watermark addition operation, and a cropping operation on a photo 1101.

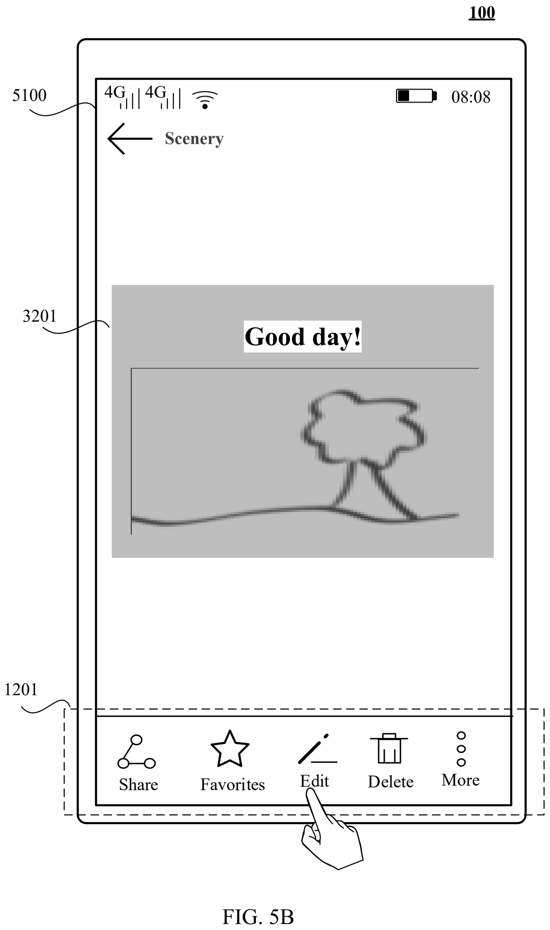

For example, as shown in FIG. 5A, the electronic device 100 may receive an input operation (for example, a tap operation) performed by a user on the photo 3201 in the user interface 3300. In response to the input operation of the user, the electronic device 100 may display a user interface 5100 shown in FIG. 5B. The user interface 5100 includes the photo 3201 and a menu 1201. The menu 1201 may include a Share button, a Favorites button, an Edit button, a Delete button, and a More button.

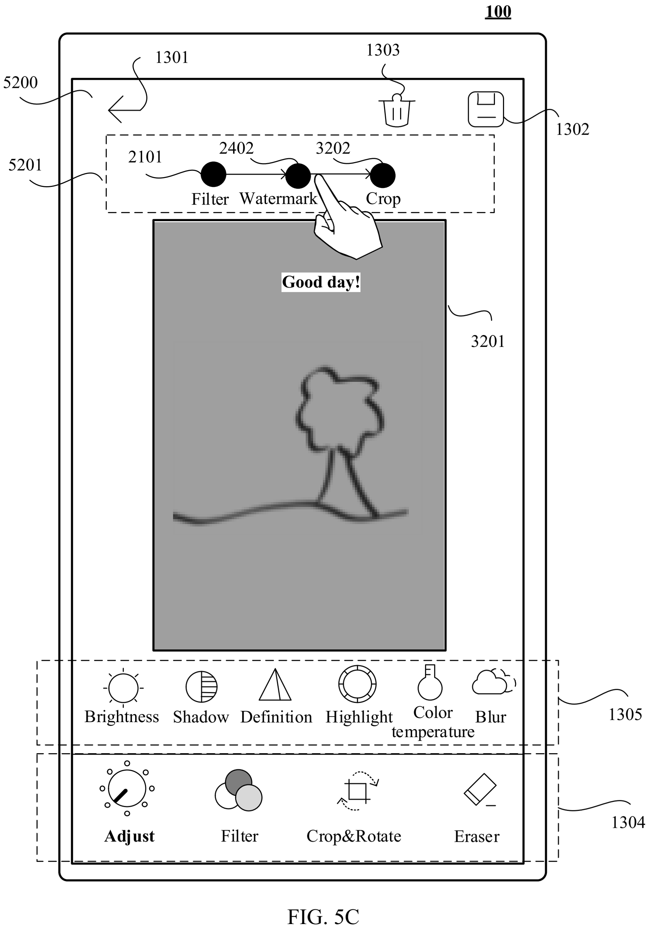

When the user needs to re-edit the photo 3201, as shown in FIG. 5B, the electronic device 100 may receive an input operation (for example, a tap operation) performed by the user on the Edit button in the menu 1201. In response to the input operation of the user, the electronic device 100 may display a user interface 5200 shown in FIG. 5C. The user interface 5200 includes the photo 3201, a back option 1301, a delete option 1303, a save option 1302, an edit bar 1304, an edit bar 1305, and a re-editing option 5201. The re-editing option 5201 includes a plurality of editing nodes, such as an editing node 2101, an editing node 2402, and an editing node 3202. The editing node 2101 points to the editing node 2402, and the editing node 2402 points to the editing node 3202. The editing node 2101 is a root node, the editing node 2402 is a child node of the editing node 2101, and the editing node 2402 is a child node of the editing node 3202.

The electronic device 100 may revert, based on an input operation performed by the user on any editing node in the re-editing option 5201, an editing effect of the photo 3201 to an editing effect corresponding to an editing node selected by the user.

In some embodiments, the user may revert the editing effect of the photo 3201 to an editing effect corresponding to the editing node 2402.

For example, as shown in FIG. 5C, the electronic device 100 may receive an input operation (for example, a tap operation) performed by the user on the editing node 2402 in the re-editing option 5201. In response to the input operation of the user, the electronic device 100 may revert the editing effect of the photo 3201 to the editing effect corresponding to the editing node 2402.

Specifically, the electronic device 100 may obtain an original photo corresponding to the photo 3201, for example, the photo 1101, obtain description information 1 of an algorithm corresponding to the editing node 2101 and description information 2 of an algorithm corresponding to the editing node 2402, and edit the photo 1101 based on the description information 1 and the description information 2 in sequence, to obtain the photo 2401.

In response to obtaining the photo 2401, the electronic device 100 further needs to generate an editing record of the photo 2401. The editing record of the photo 2401 may include photo processing algorithm parameter information 2 used for the photo 2401, and the photo processing algorithm parameter information 2 may include but is not limited to an algorithm processing structure 2 and the description information 2 of the algorithm. For example, the algorithm processing structure 2 may include: A filter addition algorithm points to a watermark addition algorithm, and the description information 2 of the algorithm may include description information of the filter addition algorithm and description information of the watermark addition algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day".

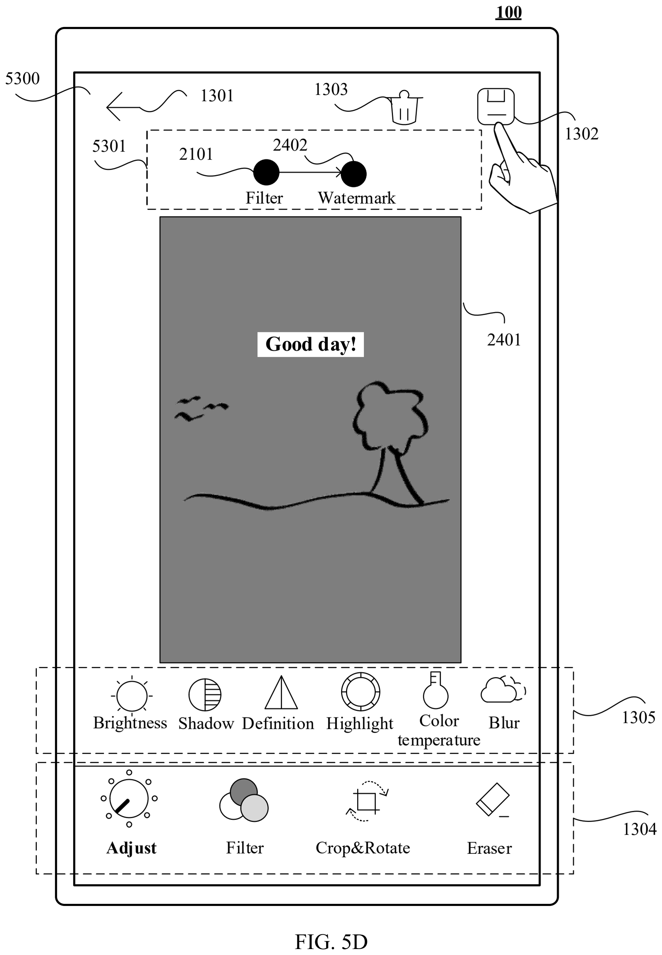

In response to obtaining the photo 2401, the electronic device 100 may display a user interface 5300 shown in FIG. 5D. The user interface 5300 may include the photo 2401, the back option 1301, the delete option 1303, the save option 1302, the edit bar 1304, the edit bar 1305, and a re-editing option 5301. The re-editing option 5301 may correspond to the algorithm processing structure 2. The re-editing option 5301 includes a plurality of editing nodes, such as the editing node 2101 and the editing node 2402. The editing node 2101 points to the editing node 2402, and the editing node 2402 is a child node of the editing node 2101. The plurality of editing nodes in the re-editing option 5301 indicate photo editing algorithms used for the photo 2401.

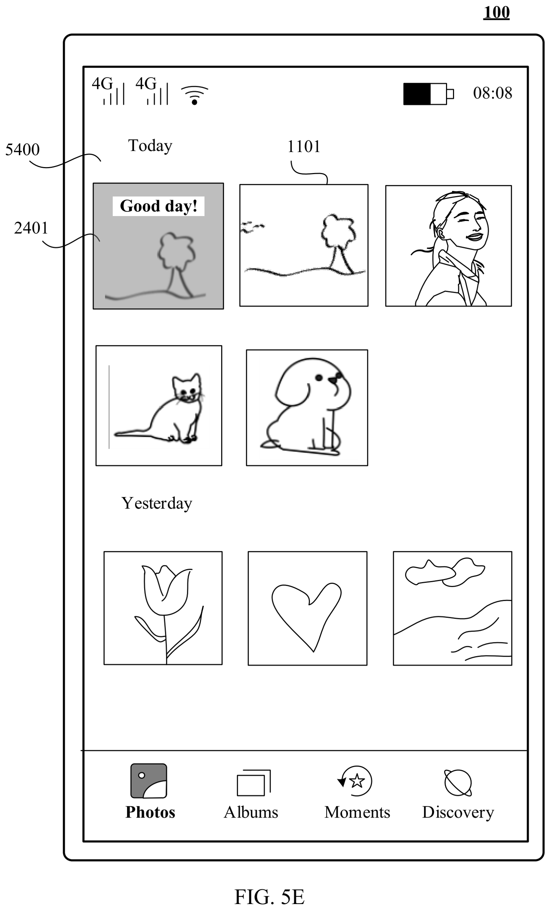

As shown in FIG. 5D, the electronic device 100 may receive an input operation (for example, a tap operation) performed by the user on the save option 1302 in the user interface 5300. In response to the input operation of the user, the electronic device 100 may save the photo 2401, and display a user interface 5400 shown in FIG. 5E. The user interface 5400 is similar to the user interface 3300, and a difference lies in that the user interface 5400 further includes the photo 2401, and does not include the photo 3201. The photo 2401 is a photo obtained by sequentially performing the filter addition operation and the watermark addition operation on the photo 1101.

In response to saving the photo 2401, the electronic device 100 further needs to save the editing record of the photo 2401.

In some embodiments, the user may revert the editing effect of the photo 3201 to an editing effect corresponding to the editing node 2101.

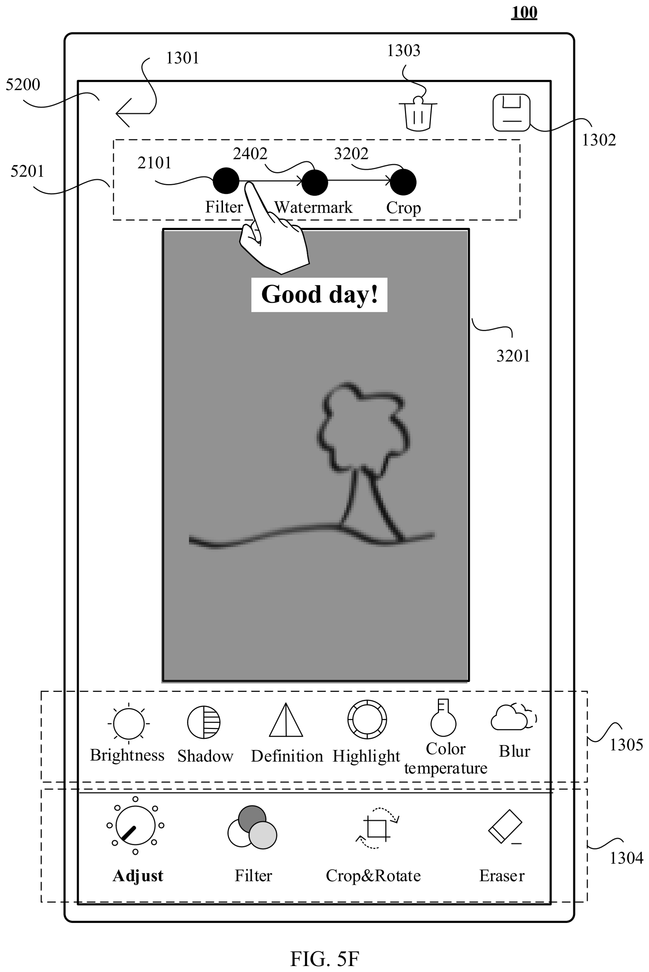

For example, as shown in FIG. 5F, the electronic device 100 may receive an input operation (for example, a tap operation) performed by the user on the editing node 2101 in the re-editing option 5201. In response to the input operation of the user, the electronic device 100 may revert the editing effect of the photo 3201 to the editing effect corresponding to the editing node 2101.

Specifically, the electronic device 100 may obtain an original photo corresponding to the photo 3201, for example, the photo 1101, obtain description information 1 of an algorithm corresponding to the editing node 2101, and edit the photo 1101 based on the description information 1, to obtain a photo 1501.

In response to obtaining the photo 1501, the electronic device 100 further needs to generate an editing record of the photo 1501. The editing record of the photo 1501 may include photo processing algorithm parameter information 1 used for the photo 1501, and the photo processing algorithm parameter information 1 may include but is not limited to an algorithm processing structure 1 and the description information 1 of the algorithm. For example, the algorithm processing structure 1 may include a filter algorithm, and the description information 1 of the algorithm may include description information of the filter algorithm. The description information of the filter algorithm may include but is not limited to an identifier or a name of the filter algorithm, a version of the filter algorithm, a parameter of the filter algorithm, and the like. For example, the parameter of the filter algorithm may be "Warm".

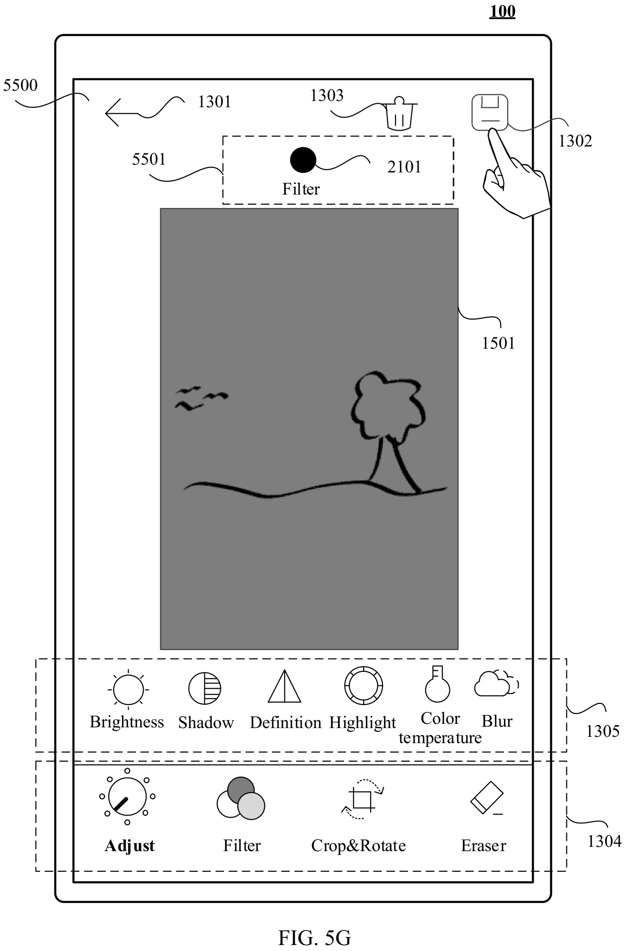

In response to obtaining the photo 1501, the electronic device 100 may display a user interface 5500 shown in FIG. 5G. The user interface 5500 may include the photo 1501, the back option 1301, the delete option 1303, the save option 1302, the edit bar 1304, the edit bar 1305, and a re-editing option 5501. The re-editing option 5501 includes one editing node, for example, the editing node 2101. The editing node in the re-editing option 5501 indicates a photo editing algorithm used for the photo 1501.

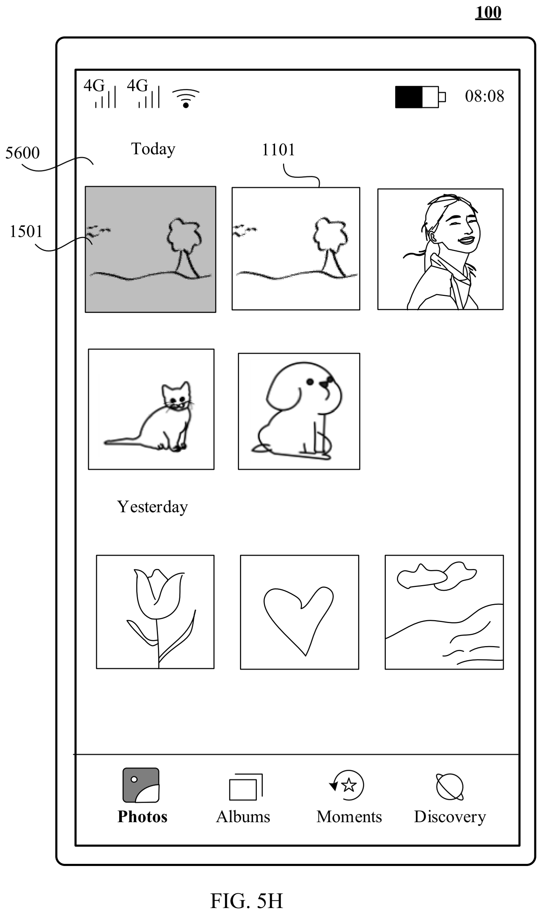

As shown in FIG. 5G, the electronic device 100 may receive an input operation (for example, a tap operation) performed by the user on the save option 1302 in the user interface 5500. In response to the input operation of the user, the electronic device 100 may save the photo 1501, and display a user interface 5600 shown in FIG. 5H. The user interface 5600 is similar to the user interface 3300, and a difference lies in that the user interface 5600 further includes the photo 1501, and does not include the photo 3201. The photo 1501 is a photo obtained by performing the filter addition operation on the photo 1101.

In response to saving the photo 1501, the electronic device 100 further needs to save the editing record of the photo 1501.

In some embodiments, the user may alternatively re-edit the photo 3201, so that the photo 3201 is reverted to have a display effect of the original photo.

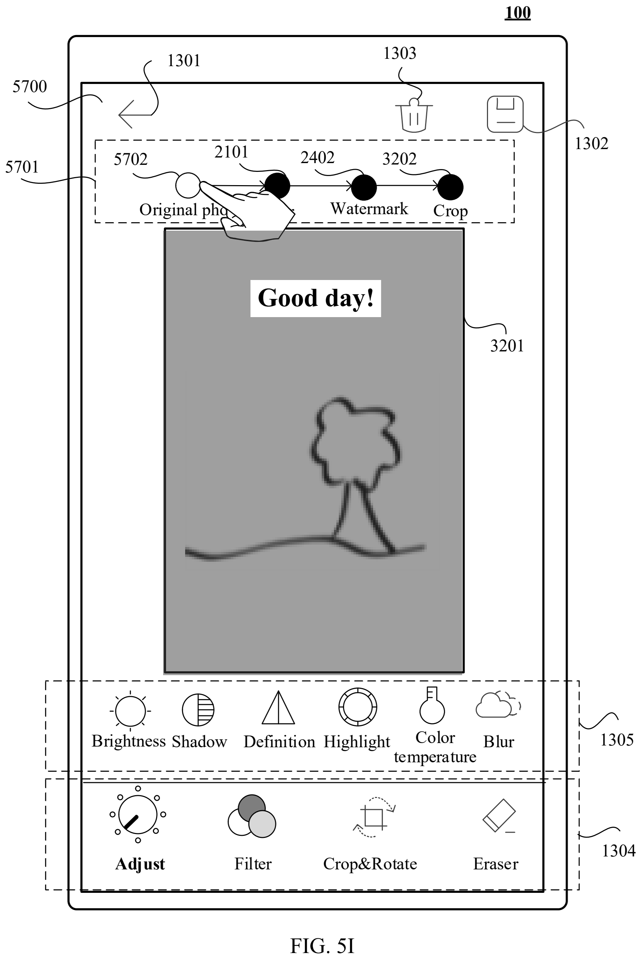

For example, with reference to the descriptions in the embodiments in FIG. 5A and FIG. 5B, in response to an input operation (for example, a tap operation) performed by the user on the Edit button, the electronic device 100 may display a user interface 5700 shown in FIG. 5I. The user interface 5700 includes the photo 3201, the back option 1301, the delete option 1303, the save option 1302, the edit bar 1304, the edit bar 1305, and a re-editing option 5701. The re-editing option 5701 includes a plurality of editing nodes, such as an editing node 5702, the editing node 2101, the editing node 2402, and the editing node 3202. The editing node 5702 points to the editing node 2101, the editing node 2101 points to the editing node 2402, and the editing node 2402 points to the editing node 3202. The editing node 5702 is a root node, the editing node 2101 is a child node of the editing node 5702, the editing node 2402 is a child node of the editing node 2101, and the editing node 3202 is a child node of the editing node 2402.

Optionally, a text "Original photo" is displayed below the editing node 5702. Optionally, a display effect that is of the photo and that corresponds to the editing operation may be displayed below the editing node, or no text may be displayed below the editing node.

For example, as shown in FIG. 5I, the electronic device 100 may receive an input operation (for example, a tap operation) performed by the user on the editing node 5702 in the user interface 5700. In response to the input operation of the user, the electronic device 100 may revert the editing effect of the photo 3201 to an editing effect corresponding to the editing node 5702.

Specifically, the electronic device 100 may obtain an original photo corresponding to the photo 3201, for example, the photo 1101, and obtain description information of an algorithm corresponding to the editing node 5702. The editing node 5702 corresponds to the original photo. In this case, the electronic device 100 may directly obtain the photo 1101.

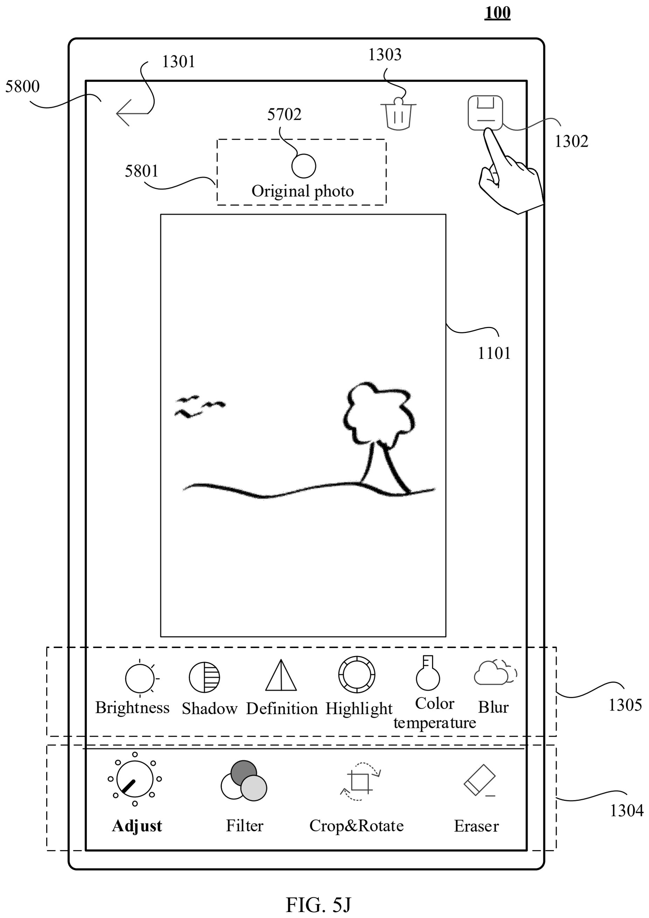

In response to obtaining the photo 1501, the electronic device 100 may display a user interface 5800 shown in FIG. 5J. The user interface 5800 includes the photo 1101, the back option 1301, the delete option 1303, the save option 1302, the edit bar 1304, the edit bar 1305, and a re-editing option 5801. The re-editing option 5801 includes one editing node, for example, the editing node 5702. The editing node in the re-editing option 5801 indicates that the photo 1101 is the original photo.

As shown in FIG. 5J, the electronic device 100 may receive an input operation (for example, a tap operation) performed by the user on the save option 1302 in the user interface 5800. In response to the input operation of the user, the electronic device 100 may save the photo 1101.

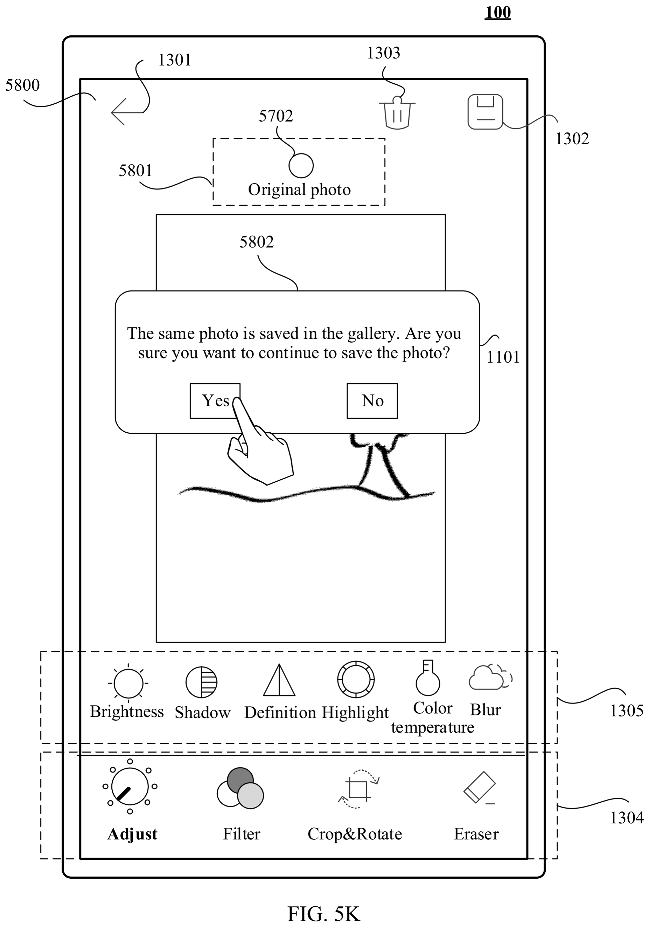

Optionally, the photo 1101 has been saved in a gallery application. After the electronic device 100 receives the input operation performed by the user on the save option 1302 in the user interface 5800, the electronic device 100 may display prompt information 5802 shown in FIG. 5K. The prompt information 5802 includes a text "The same photo is saved in the gallery. Are you sure you want to continue to save the photo?" The prompt information 5802 is used to prompt the user whether to confirm to save the photo.

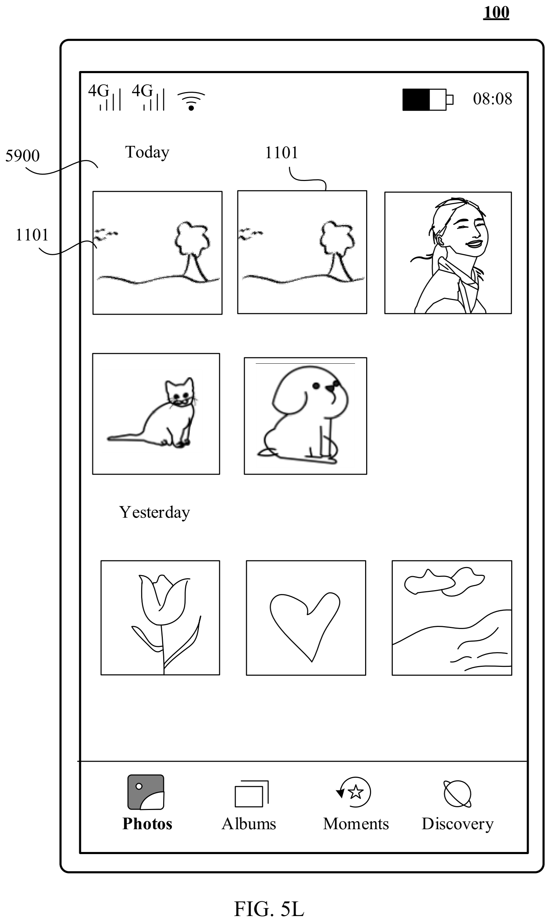

In a possible implementation, as shown in FIG. 5K, the electronic device 100 may receive an input operation (for example, a tap operation) performed by the user on a Yes option in the prompt information 5802. In response to the input operation of the user, the electronic device 100 may display a user interface 5900 shown in FIG. 5L. As shown in FIG. 5L, the electronic device 100 saves two photos 1101.

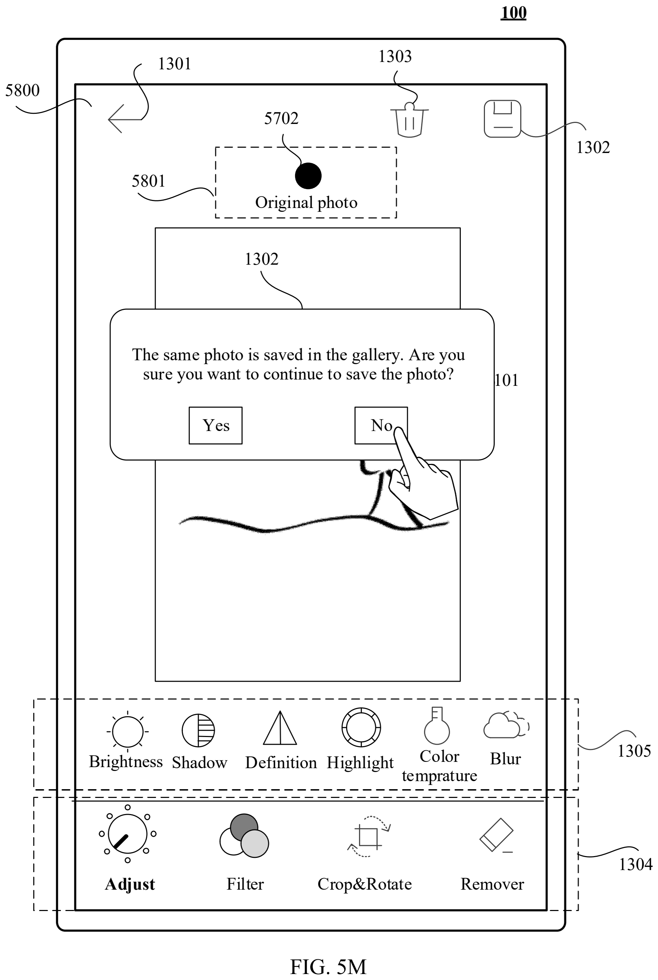

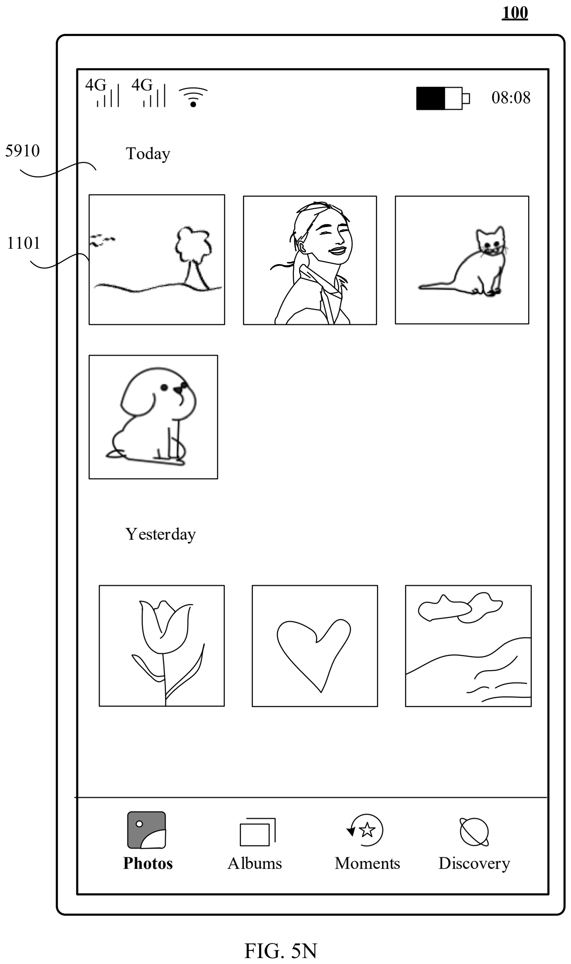

In another possible implementation, as shown in FIG. 5M, the electronic device 100 may receive an input operation (for example, a tap operation) performed by the user on a No option in the prompt information 5802. In response to the input operation of the user, the electronic device 100 may display a user interface 5910 shown in FIG. 5N. As shown in FIG. 5N, the electronic device 100 saves only one photo 1101.

In some embodiments, the user may alternatively re-edit the photo 3201, so that the photo 3201 is randomly reverted to a plurality of editing nodes selected by the user. The plurality of editing nodes may be adjacent editing nodes or non-adjacent editing nodes.

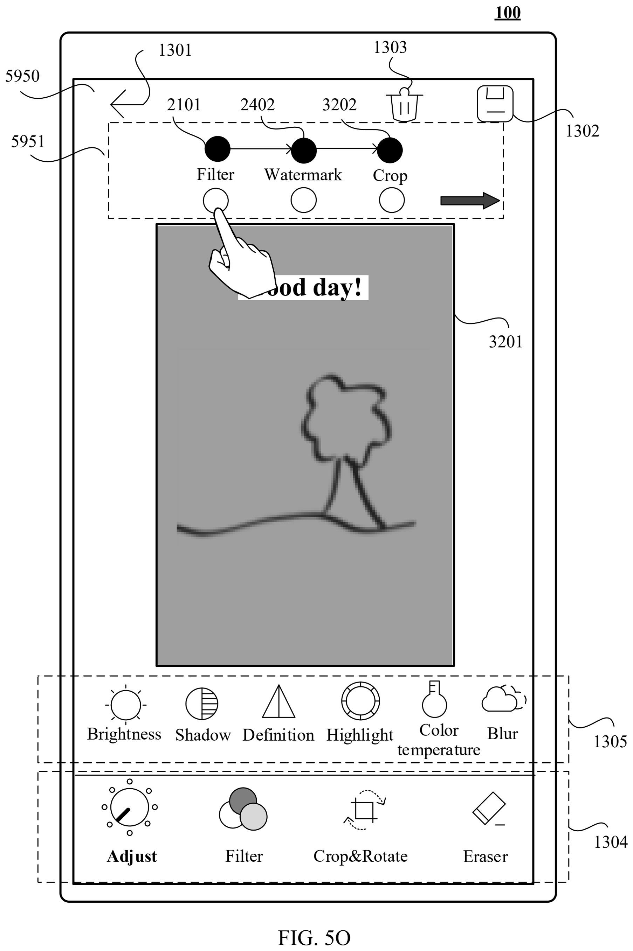

For example, with reference to the descriptions in the embodiments in FIG. 5A and FIG. 5B, in response to an input operation (for example, a tap operation) performed by the user on the Edit button, the electronic device 100 may display a user interface 5950 shown in FIG. 5O. The user interface 5950 includes the photo 3201, the back option 1301, the delete option 1303, the save option 1302, the edit bar 1304, the edit bar 1305, and a re-editing option 5951. The re-editing option 5951 includes a plurality of editing nodes, such as the editing node 2101, the editing node 2402, and the editing node 3202. The re-editing option 5951 further includes a plurality of editing node options. The editing node 2101 points to the editing node 2402, and the editing node 2402 points to the editing node 3202. The editing node 5702 is a root node, the editing node 2101 is a root node, the editing node 2402 is a child node of the editing node 2101, and the editing node 3202 is a child node of the editing node 2402.

The user may select any one or more editing options in the plurality of editing node options, so that the photo 3201 is randomly reverted to have any photo editing effect corresponding to the any one or more editing options selected by the user.

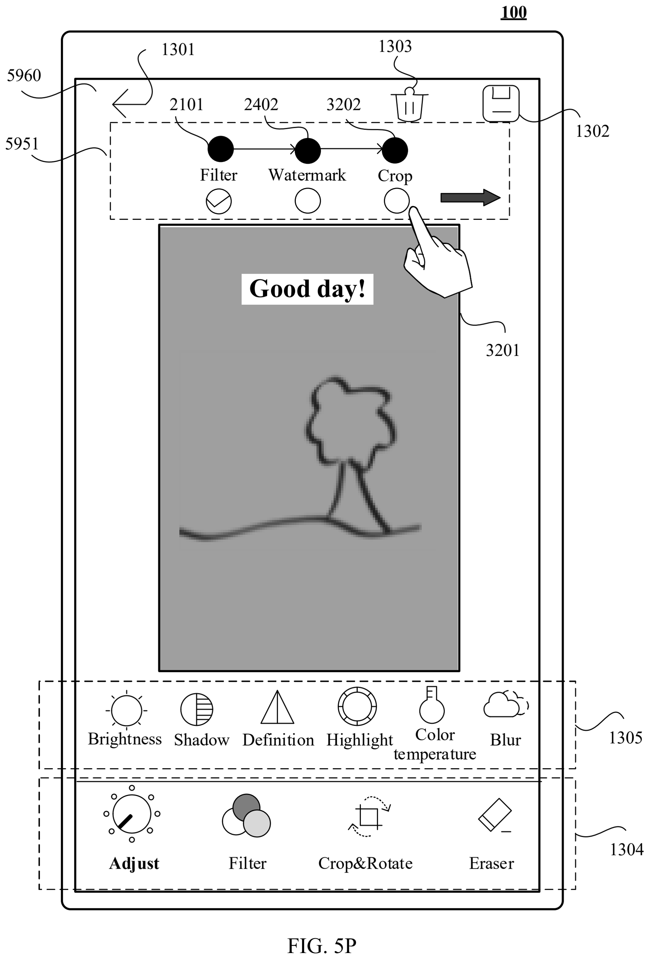

For example, as shown in FIG. 5P, the electronic device 100 may receive an input operation (for example, a tap operation) performed by the user on the editing node 5702 in the user interface 5700. In response to the input operation of the user, the electronic device 100 may revert the editing effect of the photo 3201 to an editing effect corresponding to the editing node 5702.

As shown in FIG. 5O, the electronic device 100 may receive an input operation (for example, a tap operation) performed by the user on an editing node option corresponding to the editing node 2101 in the re-editing option 5951. In response to the input operation of the user, the electronic device 100 may select the editing node 2101, as shown in FIG. 5P.

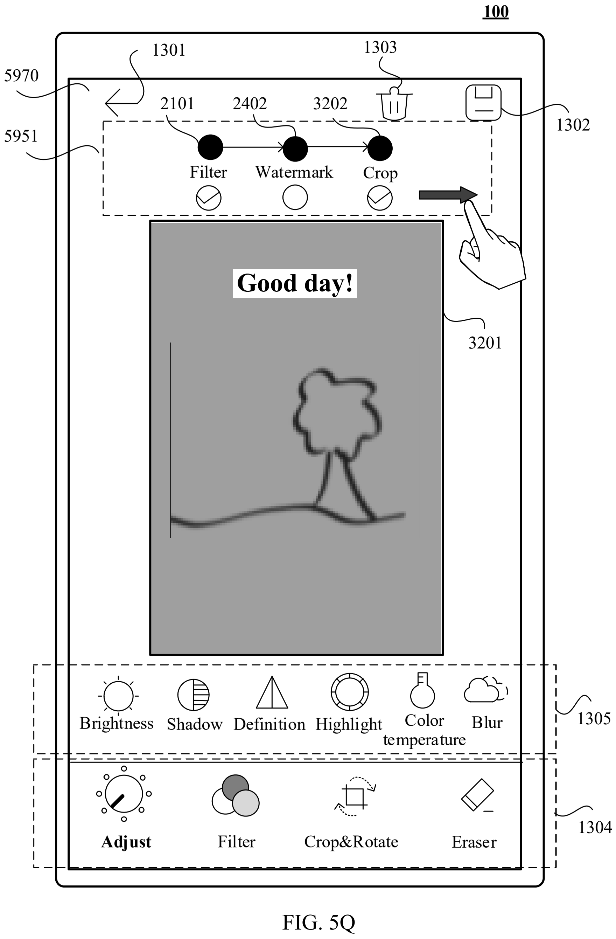

As shown in FIG. 5P, the electronic device 100 may receive an input operation (for example, a tap operation) performed by the user on an editing node option corresponding to the editing node 3202 in the re-editing option 5951. In response to the input operation of the user, the electronic device 100 may select the editing node 3202, as shown in FIG. 5Q.

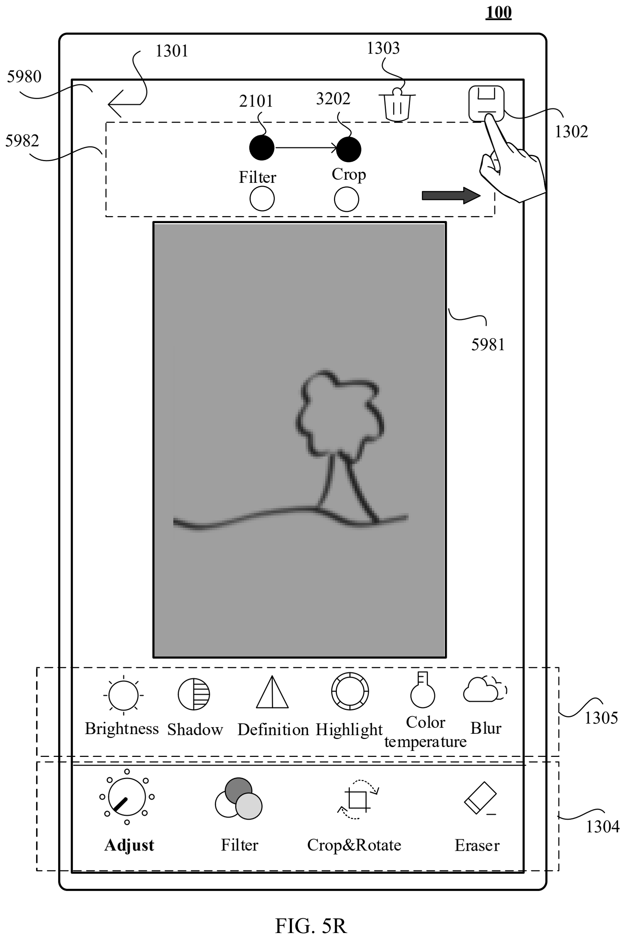

As shown in FIG. 5Q, the electronic device 100 may receive an input operation (for example, a tap operation) performed by the user on a continue option in the re-editing option 5951. In response to the input operation of the user, the electronic device 100 may obtain the original photo, for example, the photo 1101, corresponding to the photo 3201, obtain description information 1 of an algorithm corresponding to the editing node 2101, and edit the photo 1101 based on the description information 1 of the algorithm, to obtain the photo 1501. Then, the electronic device 100 obtains description information 3 of an algorithm corresponding to the editing node 3202, and edits the photo 1501 based on the description information 3 of the algorithm, to obtain a photo 5981 shown in FIG. 5R.

In response to obtaining the photo 5981, the electronic device 100 may display a user interface 5980 shown in FIG. 5R. The user interface 5980 includes the photo 5981, the back option 1301, the delete option 1303, the save option 1302, the edit bar 1304, the edit bar 1305, and a re-editing option 5982. The re-editing option 5982 includes two editing nodes, such as the editing node 2101 and the editing node 3202. The two editing nodes in the re-editing option 5982 indicate photo editing algorithms used for the photo 5981.

In response to obtaining the photo 5981, the electronic device 100 further needs to generate an editing record of the photo 5981. The editing record of the photo 5981 may include photo processing algorithm parameter information 4 used for the photo 5981, and the photo processing algorithm parameter information 4 may include but is not limited to an algorithm processing structure 4 and the description information 4 of the algorithm. For example, the algorithm processing structure 4 may include a filter algorithm and a cropping algorithm. The description information 4 of the algorithm may include description information of the filter algorithm and description information of the cropping algorithm. The description information of the filter algorithm may include but is not limited to an identifier or a name of the filter algorithm, a version of the filter algorithm, a parameter of the filter algorithm, and the like. For example, the parameter of the filter algorithm may be "Warm". The description information of the cropping algorithm may include but is not limited to an identifier or a name of the cropping algorithm, a version of the cropping algorithm, a parameter of the cropping algorithm, and the like. For example, the parameter of the cropping algorithm may be a size of a cropping box.

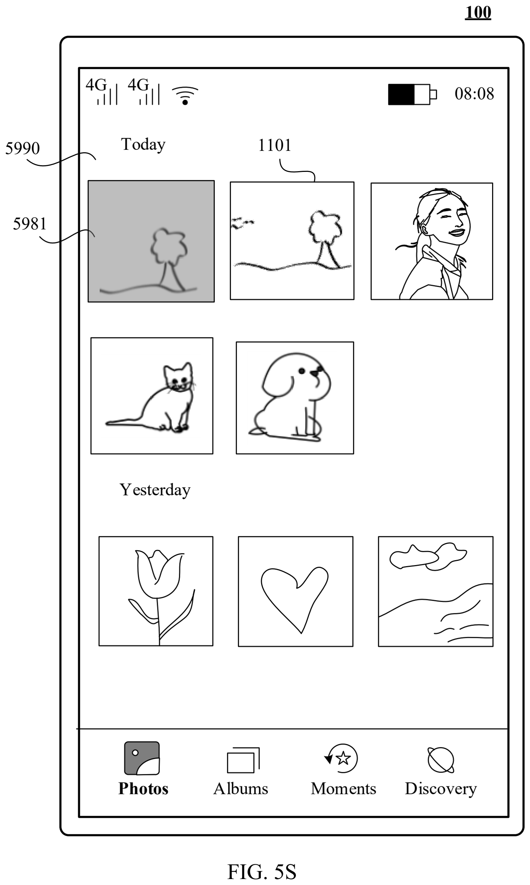

As shown in FIG. 5R, the electronic device 100 may receive an input operation (for example, a tap operation) performed by the user on the save option 1302 in the user interface 5980. In response to the input operation of the user, the electronic device 100 may save the photo 5981, and display a user interface 5990 shown in FIG. 5S. The user interface 5990 is similar to the user interface 3300, and a difference lies in that the user interface 5990 further includes the photo 5981, and does not include the photo 3201. The photo 5981 is a photo obtained by performing the filter addition operation and the cropping algorithm on the photo 1101.

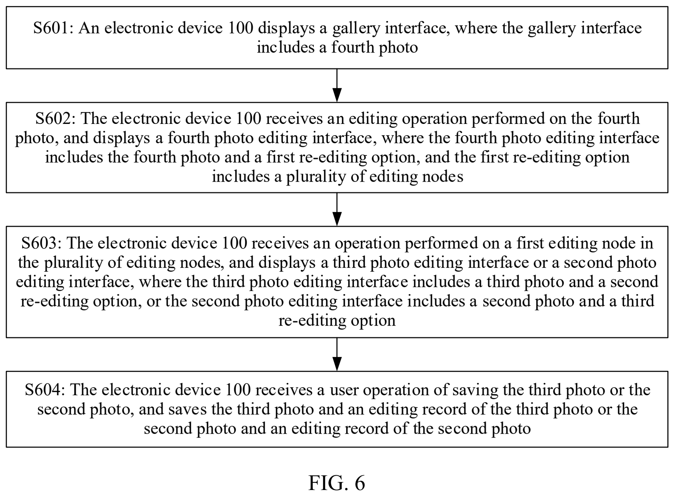

**FIG. 6** **is a schematic flowchart of a photo re-editing method according to this application.**

S601: An electronic device 100 displays a gallery interface, where the gallery interface includes a fourth photo.

For example, the photo interface may be the user interface 3300 shown in FIG. 5A or the user interface 5100 shown in FIG. 5B.

For example, the fourth photo may be the photo 3201 shown in FIG. 5A or FIG. 5B.

S602: The electronic device 100 receives an editing operation performed on the fourth photo, and displays a fourth photo editing interface, where the fourth photo editing interface includes the fourth photo and a first re-editing option, and the first re-editing option includes a plurality of editing nodes.

For example, the editing operation performed by a user on the fourth photo may be the input operation, for example, the tap operation, performed on the Edit button in the user interface 5100 shown in FIG. 5B.

For example, the fourth photo editing interface may be the user interface 5200 shown in FIG. 5C or FIG. 5F.

For example, the fourth photo may be the photo 3201 shown in FIG. 5C or FIG. 5F.

For example, the first re-editing option may be the re-editing option 5201 shown in FIG. 5C or FIG. 5F.

For example, the plurality of editing nodes may be the editing node 2101, the editing node 2402, and the editing node 3202 in the re-editing option 5201 shown in FIG. 5C or FIG. 5F.

In some embodiments, in response to receiving, by the user, the editing operation performed on the fourth photo, before displaying the fourth photo editing interface, the electronic device 100 may obtain an editing record of the fourth photo. The editing record of the fourth photo may include but is not limited to an algorithm processing structure 3 and description information 3 of an algorithm. The electronic device 100 may display the first re-editing option based on the algorithm processing structure 3.

The editing operation performed on the fourth photo may include photo processing algorithm parameter information 3 used for the photo 3201, and the photo processing algorithm parameter information 3 may include but is not limited to the algorithm processing structure 3 and the description information 3 of the algorithm. For example, the algorithm processing structure 3 may include that a filter addition algorithm points to a watermark addition algorithm, and the watermark addition algorithm points to a cropping algorithm. The description information 3 of the algorithm may include description information of the filter addition algorithm, description information of the watermark addition algorithm, and description information of the cropping algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day". The description information of the cropping algorithm may include but is not limited to an identifier or a name of the watermark addition algorithm, a version of the watermark addition algorithm, a parameter of the watermark addition algorithm, and the like. For example, the parameter of the cropping algorithm may be a size of a cropping box.

S603: The electronic device 100 receives an operation performed on a first editing node in the plurality of editing nodes, and displays a third photo editing interface or a second photo editing interface, where the third photo editing interface includes a third photo and a second re-editing option, or the second photo editing interface includes a second photo and a third re-editing option.

The first editing node may be any editing node in the first re-editing option.

For example, the first editing node may be the editing node 2101 or the editing node 2402 shown in FIG. 5C or FIG. 5F.

When the first editing node is the editing node 2402 shown in FIG. 5C, the operation that is received by the electronic device 100 and that is performed on the first editing node in the plurality of editing nodes may be the input operation, for example, the tap operation, performed by the user on the editing node 2402 shown in FIG. 5C. The third photo editing interface may be the user interface 5300 shown in FIG. 5D, the third photo may be the photo 2401 shown in FIG. 5D, and the second re-editing option may be the re-editing option 5301 shown in FIG. 5D.

For example, in response to the operation performed on the first editing node in the plurality of editing nodes, the electronic device 100 may obtain an editing record of the photo 3201, and obtain, based on the editing record of the photo 3201, the photo 2401 shown in FIG. 5D based on the photo 1101 according to a "warm" filter addition algorithm and a "Good day" text watermark addition algorithm in sequence.

For example, the electronic device 100 may obtain the editing record of the photo 3201, and the editing record of the photo 3201 may be saved as the data structures shown in Table 1, Table 2, and Table 3. The electronic device 100 may obtain the storage address of the original photo that is compressed (for example, a storage address of the photo 3201) from the TBP-APP 1 segment in Table 1, and then obtain the photo 1101 based on the storage address of the photo 3201. Then, the electronic device 100 may obtain a third algorithm structure of the photo 3201 from the GPI 0 segment in Table 2; obtain, based on the editing node 2402, the identifier of the filter addition algorithm and the identifier of the watermark addition algorithm that correspond to the editing node 2101; and further obtain a data structure fat pointer of the filter addition algorithm from the GPI 1 segment in Table 2 based on the identifier of the filter addition algorithm, and obtain a data structure fat pointer of the watermark addition algorithm from the GPI 2 segment in Table 2 based on the identifier of the watermark addition algorithm. In addition, the electronic device 100 may obtain the parameter of the filter addition algorithm from the PAR segment in Table 3 based on the data structure fat pointer of the filter addition algorithm, and obtain the parameter of the watermark addition algorithm from the PAR segment in Table 3 based on the data structure fat pointer of the watermark addition algorithm. Finally, the electronic device 100 may edit the photo 1101 based on the photo 1101 and the parameter of the filter addition algorithm and the parameter of the watermark addition algorithm, to obtain the photo 2401. In some embodiments, in response to obtaining the photo 2401, the electronic device 100 further needs to generate an editing record of the photo 2401, and the editing record of the photo 2401 may also be saved as the data structures shown in Table 1, Table 2, and Table 3. The editing record of the photo 2401 may include photo processing algorithm parameter information 2 used for the photo 2401, and the photo processing algorithm parameter information 2 may include but is not limited to an algorithm processing structure 2 and description information 2 of an algorithm. For example, the algorithm processing structure 2 may include that a filter addition algorithm points to a watermark addition algorithm, and the description information 2 of the algorithm may include description information of the filter addition algorithm and description information of the watermark addition algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day".

In some embodiments, in response to the operation performed on the editing node 2402 in the plurality of editing nodes, the electronic device 100 may send the photo 3201 and the editing record of the photo 3201 to a server. The server may re-edit the photo 1101 based on the photo 1101 and the editing node 2402 according to the filter addition algorithm and the watermark addition algorithm in sequence that are recorded in the editing record of the photo 3201, to obtain the photo 2401.

The server further needs to generate the editing record of the photo 2401, and send the photo 2401 and the editing record of the photo 2401 to the electronic device 100, so that the electronic device 100 can save the photo 2401 and the editing record of the photo 2401.

When the first editing node is the editing node 2101 shown in FIG. 5F, the operation that is received by the electronic device 100 and that is performed on the first editing node in the plurality of editing nodes may be the input operation, for example, the tap operation, performed by the user on the editing node 2101 shown in FIG. 5F. The second photo editing interface may be the user interface 5500 shown in FIG. 5G, the second photo may be the photo 1501 shown in FIG. 5G, and the third re-editing option may be the re-editing option 5501 shown in FIG. 5G.

For example, in response to the operation performed on the first editing node in the plurality of editing nodes, the electronic device 100 may obtain the editing record of the photo 3201, and obtain, based on the editing record of the photo 3201, the photo 1501 shown in FIG. 5G based on the photo 1101 according to a "warm" filter addition algorithm.

For example, the electronic device 100 may obtain the editing record of the photo 3201, and the editing record of the photo 3201 may be saved as the data structures shown in Table 1, Table 2, and Table 3. The electronic device 100 may obtain the storage address of the original photo that is compressed (for example, a storage address of the photo 3201) from the TBP-APP 1 segment in Table 1, and then obtain the photo 1101 based on the storage address of the photo 3201. Then, the electronic device 100 may obtain a third algorithm structure of the photo 3201 from the GPI 0 segment in Table 2; obtain, based on the editing node 2101, the identifier of the filter addition algorithm corresponding to the editing node 2101; and further obtain a data structure fat pointer of the filter addition algorithm from the GPI 1 segment in Table 2 based on the identifier of the filter addition algorithm. Then, the electronic device 100 may obtain the parameter of the filter addition algorithm from the PAR segment in Table 3 based on the data structure fat pointer of the filter addition algorithm. Finally, the electronic device 100 may edit the photo 1101 based on the photo 1101 and the parameter of the filter addition algorithm, to obtain the photo 1501. In some embodiments, in response to obtaining the photo 1501, the electronic device 100 further needs to generate an editing record of the photo 1501, and the editing record of the photo 2401 may also be saved as the data structures shown in Table 1, Table 2, and Table 3. The editing record of the photo 1501 may include photo processing algorithm parameter information 1 used for the photo 1501, and the photo processing algorithm parameter information 1 may include but is not limited to an algorithm processing structure 1 and description information 1 of an algorithm. For example, the algorithm processing structure 1 may include a filter algorithm, and the description information 1 of the algorithm may include description information of the filter algorithm. The description information of the filter algorithm may include but is not limited to an identifier or a name of the filter algorithm, a version of the filter algorithm, a parameter of the filter algorithm, and the like. For example, the parameter of the filter algorithm may be "Warm".

In some embodiments, in response to the operation performed on the editing node 2101 in the plurality of editing nodes, the electronic device 100 may send the photo 3201 and the editing record of the photo 3201 to a server. The server may re-edit the photo 1101 based on the photo 1101 and the editing node 2101 according to the filter addition algorithm recorded in the editing record of the photo 3201, to obtain the photo 1501.

The server further needs to generate the editing record of the photo 1501, and send the photo 1501 and the editing record of the photo 1501 to the electronic device 100, so that the electronic device 100 can save the photo 1501 and the editing record of the photo 1501.

S604: The electronic device 100 receives a user operation of saving the third photo or the second photo, and saves the third photo and an editing record of the third photo or the second photo and an editing record of the second photo.

In some embodiments, the editing record of the third photo or the editing record of the second photo may also be saved as the data structures shown in Table 1, Table 2, and Table 3.

In some embodiments, after the electronic device 100 generates the third photo, the electronic device 100 may receive the user operation, and save the third photo and the editing record of the third photo.

For example, the user operation of saving the third photo may be the input operation, for example, the tap operation, performed on the save option 1302 shown in FIG. 5D.

In some embodiments, after the electronic device 100 saves the third photo and the editing record of the third photo, the electronic device 100 may display the user interface 5400 shown in FIG. 5E. The user interface 5400 includes the third photo (the photo 2401).

In another embodiment, after the electronic device 100 generates the second photo, the electronic device 100 may receive the user operation, and save the second photo and the editing record of the second photo.

For example, the user operation of saving the second photo may be the input operation, for example, the tap operation, performed on the save option 1302 shown in FIG. 5G.

In some embodiments, after the electronic device 100 saves the second photo and the editing record of the second photo, the electronic device 100 may display the user interface 5600 shown in FIG. 5H. The user interface 5600 includes the second photo (the photo 1501).

In some embodiments, if the electronic device 100 receives user operations of opening, in a Meitu application, a photo in the gallery application and editing, in the Meitu application, the photo in the gallery application, because the Meitu application and the gallery application are not a same application, and a photo editing algorithm of the gallery application is different from that of the gallery application, the electronic device 100 cannot re-edit, in the Meitu application, the photo in the gallery application. In this case, the electronic device 100 may not display the first re-editing option.

In some embodiments, if the electronic device 100 receives user operations of opening, in a Meitu application, a photo in the gallery application and editing, in the Meitu application, the photo in the gallery application, and the Meitu application and the gallery application share a photo editing algorithm, or the Meitu application may invoke a photo editing algorithm in the gallery application, the electronic device 100 may alternatively re-edit, in the Meitu application, the photo in the gallery application. In this case, the electronic device 100 may display the first re-editing option.

**3. Share the photo, including the photo and the editing record of the photo.**

In some embodiments, after the electronic device 100 saves the edited photo, the electronic device 100 may send, to another electronic device to which a communication connection is established, the edited photo and the editing record of the photo that are saved. The another electronic device may also re-edit the photo sent by the electronic device 100.

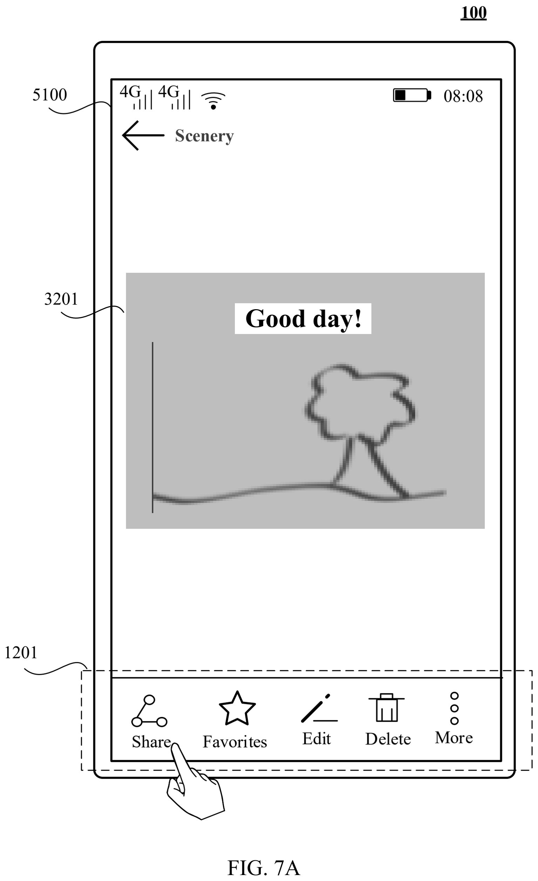

For example, FIG. 7A to FIG. 7G are diagrams of UIs in which the electronic device 100 shares the photo 3201 with an electronic device 200.

For example, as shown in FIG. 7A, the electronic device 100 may display a user interface 5100. The user interface 5100 includes the photo 3201 and a menu 1201. The menu 1201 may include a Share button, a Favorites button, an Edit button, a Delete button, and a More button. The Share button may be used to trigger starting of a system sharing interface.

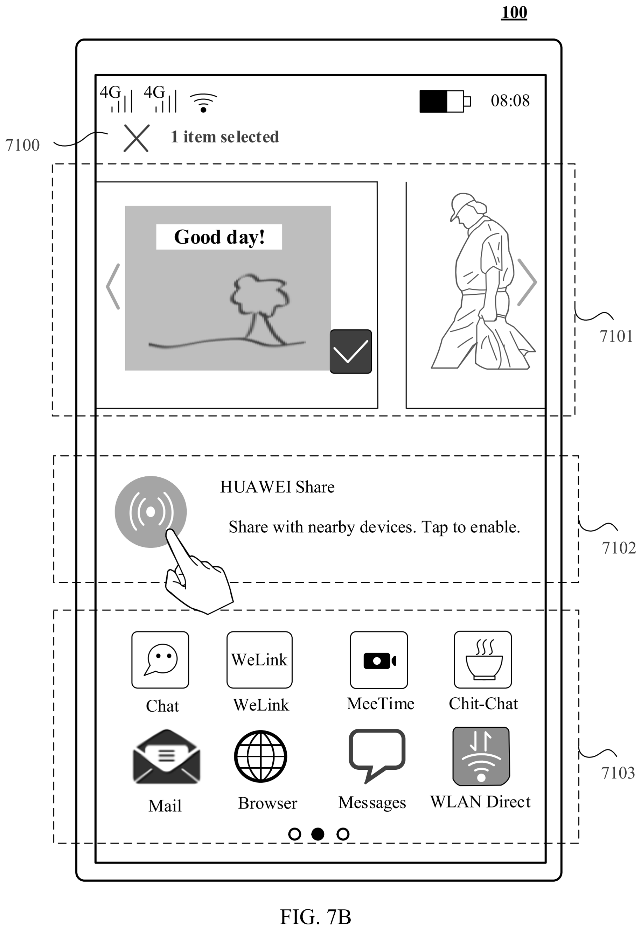

The electronic device 100 may receive an input (for example, a tap) of a user for the Share button. In response to the input, the electronic device 100 may display a system sharing interface 7100 shown in FIG. 7B.

As shown in FIG. 7B, the system sharing interface 7100 includes an area 7101, an area 7102, and an area 7103. The area 7101 may be used to display one or more photos or videos in a gallery of the electronic device 100, and the one or more photos or videos may include a photo or a video selected by the user. A mark may be displayed on the selected photo, and the mark may indicate that a photo corresponding to the mark is selected (in other words, the photo is selected by the user). Optionally, the photo or a video picture that is displayed in the area 7101 may be a thumbnail.

A Huawei Share option is displayed in the area 7102. The Huawei Share option may enable the electronic device 100 to share, with another device through Bluetooth, Wi-Fi, or the like, the photo or the video selected by the user.

Icons of one or more service options (such as a chat application icon, a WeLink application icon, a MeeTime application icon, a Chit-Chat application icon, a mail application icon, a browser application icon, a messages application icon, and a WLAN Direct icon) may be displayed in the area 7103. An application or a protocol corresponding to a service option may support sharing, to a contact or a server, the photo selected by the user. The user may share data through the application or the protocol corresponding to the service option. For example, the selected photo is shared with one or more contacts in a chat application, or the selected photo is shared with a dynamic release platform (namely, a server) in a Chit-Chat application, or the like.

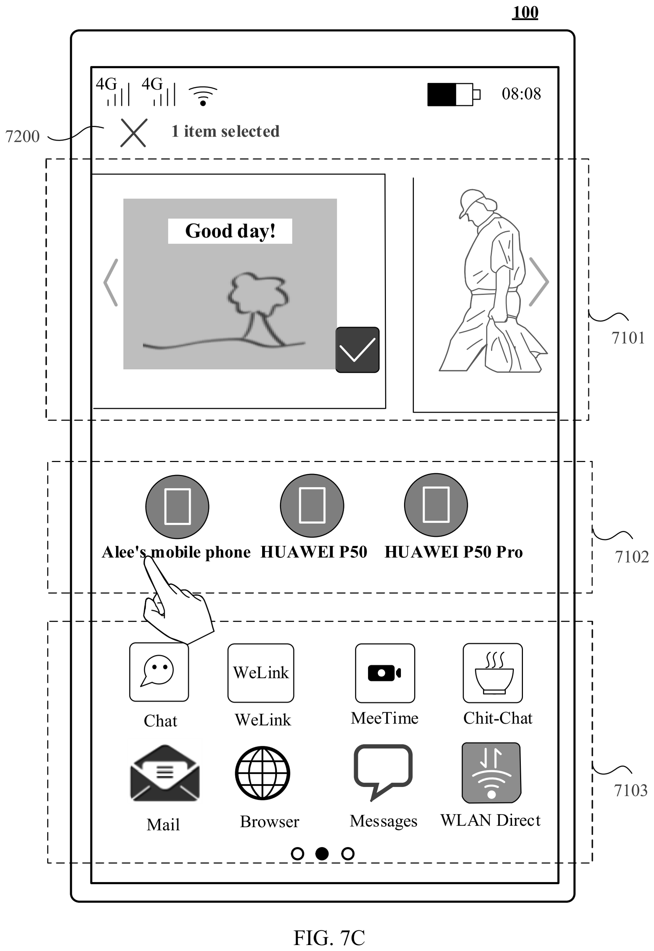

For example, as shown in FIG. 7B, the electronic device 100 may receive an input (for example, a tap) of the user for the Huawei Share option in the area 7102. In response to the input, the electronic device 100 may display a system sharing interface 7200 shown in FIG. 7C.

The system sharing interface 7200 is similar to the system sharing interface 7100, and a difference lies in that the area 7102 in the system sharing interface 7200 includes options of nearby devices discovered by the electronic device 100 (such as an option "Alee's mobile phone", an option "HUAWEI P50", and an option "HUAWEI P50 Pro"). When the electronic device 100 is searching for a nearby device, the electronic device 100 may display a search prompt (for example, a text prompt like "Searching for a nearby device, and the other party needs to enable Bluetooth and WLAN") in the area 7102.

For example, as shown in FIG. 7C, the electronic device 100 may receive an input (for example, a tap) of the user for the option "Alee's mobile phone". In response to the input, the electronic device 100 may send, to a nearby device corresponding to the option "Alee's mobile phone" through Bluetooth, Wi-Fi, or the like, the photo 3201 selected by the user. For example, an identifier "Alee's mobile phone" may be a device identifier of the electronic device 200.

In addition to sharing the photo 3201 on the electronic device 100 with the electronic device 200 in the manner shown in FIG. 1A to FIG. 1C, the electronic device 100 may further share the photo 3201 on the electronic device 100 with the electronic device 200 in another manner.

Optionally, when the electronic device 100 shares the photo 3201 with the electronic device 200, the electronic device 100 further needs to send photo information of the photo 3201 to the electronic device 100.

The photo information of the photo 3201 may include but is not limited to an editing record of the photo 3201 and application information of a first application for editing the photo 3201.

The editing record of the photo 3201 may include photo processing algorithm parameter information 3 used for the photo 3201, and the photo processing algorithm parameter information 3 may include but is not limited to an algorithm processing structure 3 and description information 3 of an algorithm. For example, the algorithm processing structure 3 may include that a filter addition algorithm points to a watermark addition algorithm, and the watermark addition algorithm points to a cropping algorithm. The description information 3 of the algorithm may include description information of the filter addition algorithm, description information of the watermark addition algorithm, and description information of the cropping algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day". The description information of the cropping algorithm may include but is not limited to an identifier or a name of the watermark addition algorithm, a version of the watermark addition algorithm, a parameter of the watermark addition algorithm, and the like. For example, the parameter of the cropping algorithm may be a size of a cropping box.

The application information of the first application of the photo 3201 may include but is not limited to one or more of the following: a name or an identifier of the first application, a version number of the first application, a development vendor name of the first application, and the like.

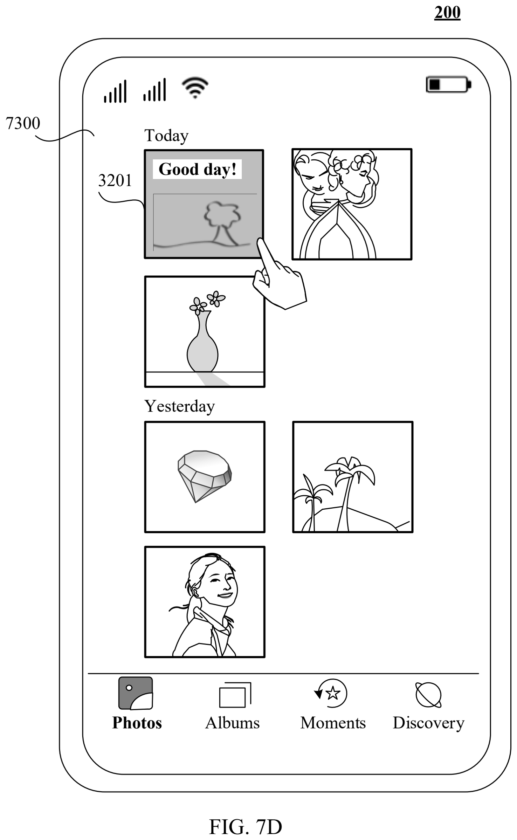

In response to receiving the photo 3201 sent by the electronic device 100, the electronic device 200 may display a user interface 7300 shown in FIG. 7D. The user interface 7300 includes the photo 3201, and the photo 3201 is sent by the electronic device 100 to the electronic device 100.

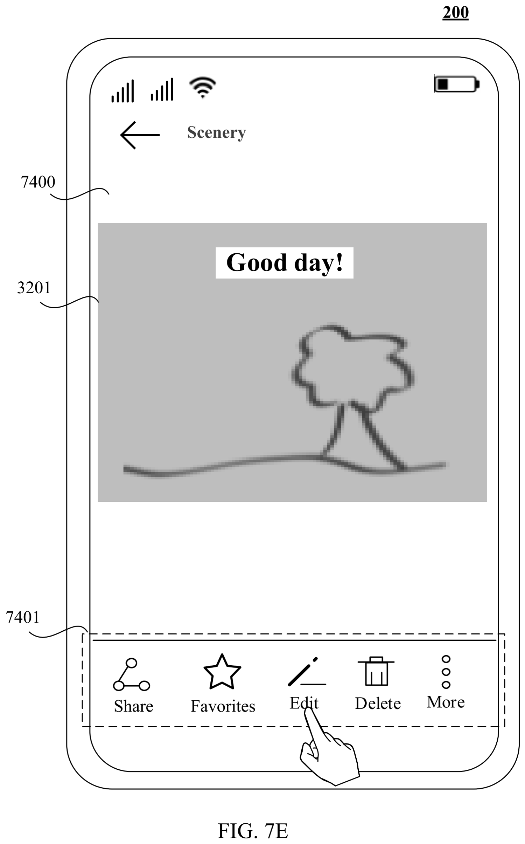

For example, as shown in FIG. 7D, the electronic device 100 may receive an input operation (for example, a tap operation) performed by the user on the photo 3201 in the user interface 7300. In response to the input operation of the user, the electronic device 100 may display a user interface 7400 shown in FIG. 7E. The user interface 7400 includes the photo 3201 and a menu 7401. The menu 7401 may include a Share button, a Favorites button, an Edit button, a Delete button, and a More button.

For example, as shown in FIG. 7E, when the user needs to re-edit the photo 3201, the electronic device 200 may receive an input operation (for example, a tap operation) performed by the user on an Edit button in the menu 7401. In response to the input operation of the user, the electronic device 100 may display an editing interface of the photo 3201.

Optionally, before the electronic device 200 displays the editing interface of the photo 3201, the electronic device 200 may obtain application information of a second application that is for currently editing the photo 3201, and the application information of the first application that is sent by the electronic device 100 and that is for editing the photo 3201. When determining, based on the application information of the second application and the application information of the first application that is sent by the electronic device 100, that the second application and the first application are a same application, the electronic device 100 may obtain the editing record of the photo 3201.

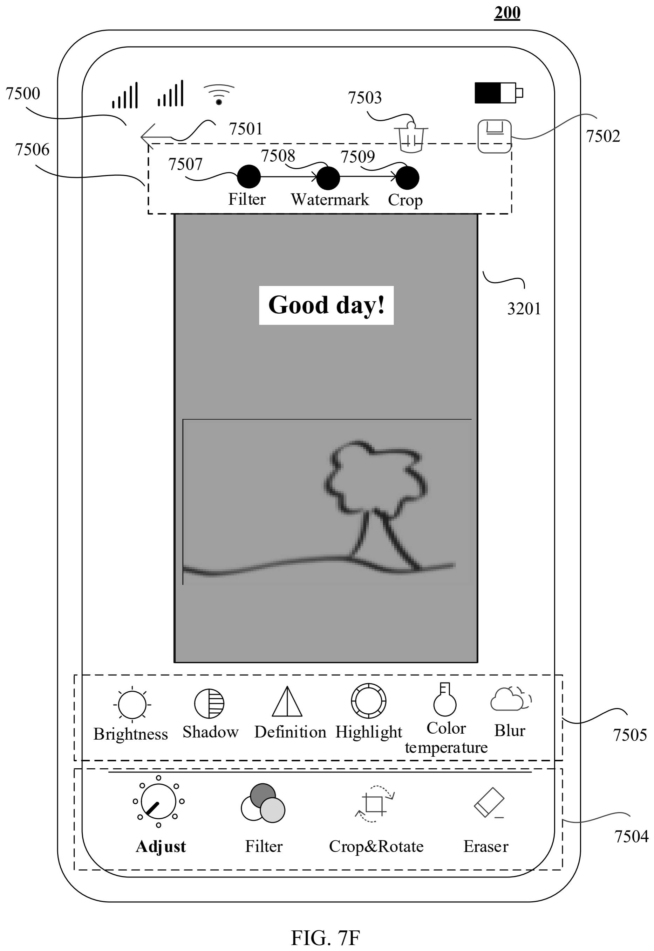

For example, as shown in FIG. 7E, when the second application and the first application are a same application, in response to that the electronic device 100 may obtain the editing record of the photo 3201, the electronic device 100 may display a user interface 7500 shown in FIG. 7F. The user interface 7500 includes the photo 3201, a back option 7501, a delete option 7503, a save option 7502, an edit bar 7504, an edit bar 7505, and a re-editing option 7506. The re-editing option 7506 includes a plurality of editing nodes, such as an editing node 7507, an editing node 7508, and an editing node 7509. The editing node 7507 points to the editing node 7508, and the editing node 7508 points to the editing node 7509. The editing node 7507 is a root node, the editing node 7507 is a child node of the editing node 7508, and the editing node 7508 is a child node of the editing node 7509. Optionally, the re-editing option 7506 may be obtained based on the algorithm processing structure in the editing record of the photo 3201.

Then, the electronic device 200 may re-edit the photo 3201 in the manner shown in FIG. 5A to FIG. 5N. For details, refer to the descriptions in the embodiments in FIG. 5A to FIG. 5N. Details are not described herein again in this application.

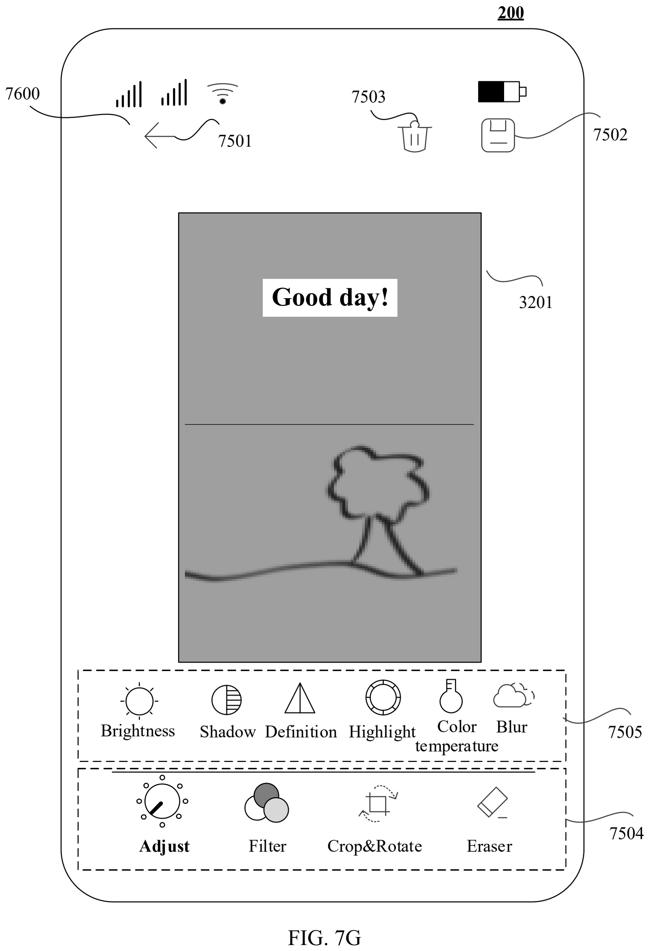

For example, as shown in FIG. 7E, when the second application and the first application are not a same application, the electronic device 100 may display a user interface 7600 shown in FIG. 7G. The user interface 7600 includes the photo 3201, a back option 7501, a delete option 7503, a save option 7502, an edit bar 7504, and an edit bar 7505. The user interface 7600 does not include the re-editing option 7506 shown in FIG. 7F. This indicates that when the first application and the second application are not a same application, the electronic device 200 cannot perform a re-editing operation on the photo 3201.

In another embodiment, the photo editing interface displayed on the electronic device 200 may be different from the photo editing interface displayed on the electronic device 100. This application is merely used as an example to explain this application.

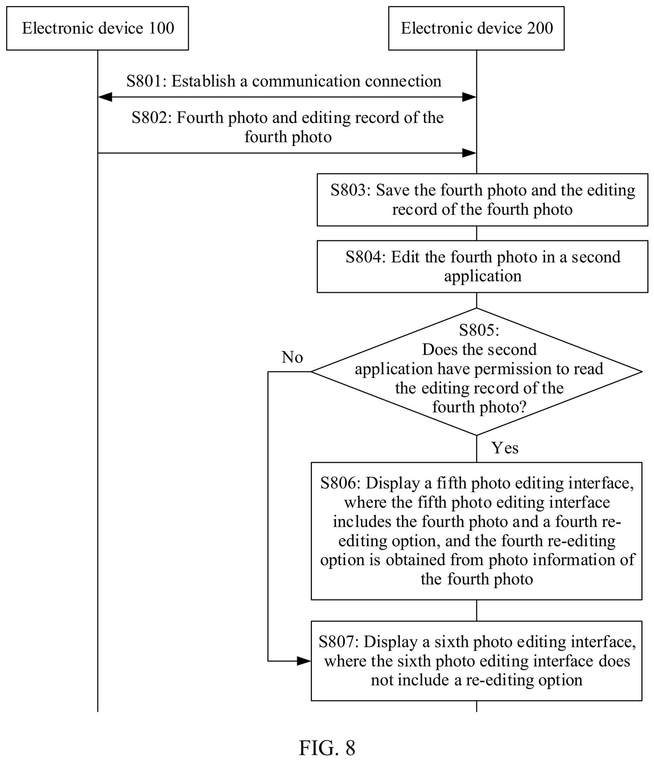

**FIG. 8** **is a schematic flowchart of a method for re-editing, by an electronic device 100, a photo sent by the electronic device 100 according to this application.**

S801: The electronic device 100 establishes a communication connection to an electronic device 200.

The electronic device 100 may establish the communication connection through Bluetooth or Wi-Fi, or the electronic device 100 may communicate with the electronic device 200 through a server.

For example, with reference to the embodiments in FIG. 7A to FIG. 7C, the electronic device 100 may establish the communication connection to the electronic device 200 through Bluetooth, Wi-Fi, or the like by using a Huawei Share option.

S802: The electronic device 100 sends a fourth photo and an editing record of the fourth photo to the electronic device 200 through the communication connection.

After a user selects the fourth photo, in response to the communication connection established between the electronic device 100 and the electronic device 200, the electronic device 100 may obtain the fourth photo and photo information of the fourth photo, and send the fourth photo and the editing record of the fourth photo to the electronic device 200 through the communication connection.

For example, the fourth photo may be the photo 3201 shown in FIG. 7A.

The editing record of the photo 3201 may include photo processing algorithm parameter information 3 used for the photo 3201, and the photo processing algorithm parameter information 3 may include but is not limited to an algorithm processing structure 3 and description information 3 of an algorithm. For example, the algorithm processing structure 3 may include that a filter addition algorithm points to a watermark addition algorithm, and the watermark addition algorithm points to a cropping algorithm. The description information 3 of the algorithm may include description information of the filter addition algorithm, description information of the watermark addition algorithm, and description information of the cropping algorithm. The description information of the filter addition algorithm may include but is not limited to an identifier or a name of the filter addition algorithm, a version of the filter addition algorithm, a parameter of the filter addition algorithm, and the like. For example, the parameter of the filter addition algorithm may be "Warm". The description information of the watermark addition algorithm may include but is not limited to an identifier or a name of the watermark addition algorithm, a version of the watermark addition algorithm, a parameter of the watermark addition algorithm, and the like. For example, the parameter of the watermark addition algorithm may be "Good day". The description information of the cropping algorithm may include but is not limited to an identifier or a name of the watermark addition algorithm, a version of the watermark addition algorithm, a parameter of the watermark addition algorithm, and the like. For example, the parameter of the cropping algorithm may be a size of a cropping box.

S803: The electronic device 200 saves the fourth photo and the editing record of the fourth photo.

After the electronic device 200 receives the fourth photo and the editing record of the fourth photo that are sent by the electronic device 100, the electronic device 200 may save the fourth photo and the editing record of the fourth photo.

For example, after the electronic device 200 saves the fourth photo and the editing record of the fourth photo, the electronic device 200 may display a user interface 7300 shown in FIG. 7D.

S804: The electronic device 200 edits the fourth photo in a second application.

After the electronic device 200 saves the fourth photo and the editing record of the fourth photo, the electronic device 200 may add the fourth photo to the second application, and edit the fourth photo.

For example, the second application may be a gallery application on the electronic device 200, or the second application may be a Meitu application on the electronic device 200. This is not limited in this application.

S805: The electronic device 200 needs to determine whether the second application has permission to read the editing record of the fourth photo.

When the second application has permission to read the editing record of the fourth photo, the electronic device 200 may re-edit the fourth photo, and revert the photo to any editing node, that is, perform S806.

When the second application has no permission to read the editing record of the fourth photo, the electronic device 200 cannot re-edit the fourth photo, that is, performs S807.

In some embodiments, whether the second application has permission to read the editing record of the fourth photo may mean whether the second application and a first application are a same application, or whether the second application and a first application share a set of photo editing algorithms. Alternatively, whether the second application has permission to read the editing record of the fourth photo may be determined according to another rule. This is not limited in this application.

For example, when the electronic device 100 sends the fourth photo and the editing record of the fourth photo to the electronic device 200, the electronic device 100 may further send application information of the first application to the electronic device 200. The first application is an application for editing a first photo to obtain the fourth photo. The application information of the first application may include but is not limited to one or more of the following: a name or an identifier of the first application, a version number of the first application, a development vendor name of the first application, and the like. The fourth photo is obtained according to one or more photo editing algorithms in the first application.

The electronic device 200 further needs to obtain application information of the second application. The application information of the second application may include but is not limited to one or more of the following: a name or an identifier of the second application, a version number of the second application, a development vendor name of the second application, and the like.

For example, that the second application and the first application are a same application may mean that the name or the identifier of the second application is the same as the name or the identifier of the first application, the version number of the second application is the same as the version number of the first application, or the development vendor name of the second application is the same as the development vendor name of the first application.

S806: The electronic device 200 displays a fifth photo editing interface, where the fifth photo editing interface includes the fourth photo and a fourth re-editing option, and the fourth re-editing option is obtained from the photo information of the fourth photo.

When the second application has permission to read the editing record of the fourth photo, the electronic device 200 may re-edit the fourth photo.

In response to editing the fourth photo by the user in the second application, the electronic device 200 may display the fifth photo editing interface, where the fifth photo editing interface includes the fourth photo and the fourth re-editing option. The fourth re-editing option is obtained by the electronic device 200 from the algorithm processing structure 3 in the editing record of the photo 3201.

For example, the fifth photo editing interface may be the user interface 7500 shown in FIG. 7F.

For example, the fourth photo may be the photo 3201 shown in FIG. 7F.

For example, the fourth re-editing option indicates photo editing algorithms sequentially used for the photo 3201, and the fourth re-editing option may be the re-editing option 7506 shown in FIG. 7F. The re-editing option 7506 includes a plurality of editing nodes, such as an editing node 7507, an editing node 7508, and an editing node 7509. The editing node 7507 points to the editing node 7508, and the editing node 7508 points to the editing node 7509. The editing node 7507 is a root node, the editing node 7507 is a child node of the editing node 7508, and the editing node 7508 is a child node of the editing node 7509.

Then, the electronic device 200 may re-edit the photo 3201 by using the re-editing option 7506 in the manner shown in FIG. 5A to FIG. 5N. For details, refer to the descriptions in the embodiments in FIG. 5A to FIG. 5N. Details are not described herein again in this application.

S807: The electronic device 200 displays a sixth photo editing interface, where the sixth photo editing interface does not include a re-editing option

When the second application has no permission to read the editing record of the fourth photo, the electronic device 200 cannot re-edit the fourth photo.

For example, when the second application is the Meitu application and the first application is the gallery application, if the electronic device 200 receives user operations of opening, in the Meitu application, a photo in the gallery application and editing, in the Meitu application, the photo in the gallery application, because a photo editing algorithm of the gallery application is different from that of the gallery application, the electronic device 200 cannot re-edit, in the Meitu application, the photo in the gallery application.

When the second application has no permission to read the editing record of the fourth photo, in response to editing the fourth photo by the user in the second application, the electronic device 200 may display the sixth photo editing interface, where the sixth photo editing interface does not include the re-editing option.

For example, the sixth photo editing interface may be the user interface 7600 shown in FIG. 7G. As shown in FIG. 7G, the user interface 7600 does not include the re-editing option. In other words, the user cannot perform a re-editing operation on the fourth photo in the sixth photo editing interface.

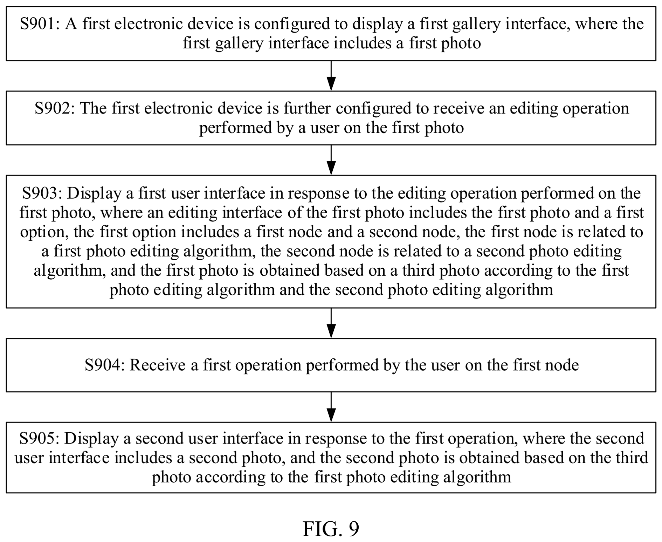

FIG. 9 is a schematic flowchart of a photo editing method according to this application.

S901: A first electronic device is configured to display a first gallery interface, where the first gallery interface includes a first photo.

For example, the first gallery interface may be the user interface 5100 shown in FIG. 5B, and the first photo may be the photo 3201 shown in FIG. 5B.

S902: The first electronic device is further configured to receive an editing operation performed by a user on the first photo.

For example, the editing operation performed on the first photo may be the input operation, for example, the tap operation, performed on the Edit option in the user interface 5100 shown in FIG. 5B.

S903: Display a first user interface in response to the editing operation performed on the first photo, where an editing interface of the first photo includes the first photo and a first option, the first option includes a first node and a second node, the first node is related to a first photo editing algorithm, the second node is related to a second photo editing algorithm, and the first photo is obtained based on a third photo according to the first photo editing algorithm and the second photo editing algorithm.

For example, the first user interface may be the user interface 5200 shown in FIG. 5C or FIG. 5F, the first photo may be the photo 3201 shown in FIG. 5C or FIG. 5F, and the first option may be the re-editing option 5201 shown in FIG. 5C or FIG. 5F. The first node and the second node may be any two nodes in the editing node 2101, the editing node 2402, and the editing node 3202 in the re-editing option 5201 shown in FIG. 5C or FIG. 5F.

For example, the first user interface may alternatively be the user interface 5200 shown in FIG. 5I, the first photo may be the photo 3201 shown in FIG. 5I, and the first option may be the re-editing option 5701 shown in FIG. 5I. The first node and the second node may be any two nodes in the editing node 5702, the editing node 2101, the editing node 2402, and the editing node 3202 in the re-editing option 5701 shown in FIG. 5I.

For example, the first user interface may alternatively be the user interface 5950 shown in FIG. 5O, and the first photo may alternatively be the photo 3201 shown in FIG. 5O. The first option may be the re-editing option 5951 shown in FIG. 5O. The first node and the second node may be any two nodes in the editing node 2101, the editing node 2402, and the editing node 3202 in the re-editing option 5951 shown in FIG. 5O.

For example, the first photo editing algorithm and the second photo editing algorithm may be any two of an original photo, the filter addition algorithm, the watermark addition algorithm, and the cropping algorithm.

For example, the third photo may be the photo 1101.

Optionally, in addition to the first photo editing algorithm and the second photo editing algorithm, the first photo may be obtained according to more other photo editing algorithms. This is not limited in this application.

In some embodiments, the first gallery interface may further include the third photo.

According to the method, the electronic device may re-edit the photo saved in the gallery application, so that the saved photo is reverted to any editing node. This improves photo editing efficiency.

S904: Receive a first operation performed by the user on the first node.

S905: Display a second user interface in response to the first operation, where the second user interface includes a second photo, and the second photo is obtained based on the third photo according to the first photo editing algorithm.

For example, the first node may be the editing node 2402 shown in FIG. 5C, the second user interface may be the user interface 5300 shown in FIG. 5D, the third photo may be the photo 2401 shown in FIG. 5D, and the first photo editing algorithm may be the watermark addition algorithm.

For example, the first node may alternatively be the editing node 2101 shown in FIG. 5F, the second user interface may be the user interface 5500 shown in FIG. 5G, the third photo may be the photo 1501 shown in FIG. 5G, and the first photo editing algorithm may be the filter addition algorithm.

For example, the first node may alternatively be the editing node 5702 shown in FIG. 5I, the second user interface may be the user interface 5800 shown in FIG. 5J, the third photo may be the photo 1101 shown in FIG. 5J, and the first photo editing algorithm may be none.

In a possible implementation, the first electronic device is further configured to: display a second gallery interface, where the second gallery interface includes the third photo; receive an editing operation performed by the user on the third photo; display a third user interface in response to the editing operation performed on the third photo, where the third user interface includes the third photo and a plurality of photo editing options; receive a second operation performed by the user on a first editing option in the plurality of photo editing options, where the first editing option is related to the first photo editing algorithm; obtain a second photo in response to the second operation; receive a third operation performed by the user on a second editing option in the plurality of photo editing options, where the second editing option is related to the second photo editing algorithm; obtain the first photo in response to the third operation; receive a fourth operation of saving the first photo; and save the first photo and an editing record of the first photo in response to the fourth operation.

In a possible implementation, the first electronic device is further configured to: display a second gallery interface, where the second gallery interface includes the third photo; receive an editing operation performed by the user on the third photo; display a third user interface in response to the editing operation performed on the third photo, where the third user interface includes the third photo and a plurality of photo editing options; receive a selection operation performed by the user on a first editing option and a second editing option in the plurality of photo editing options, where the first editing option is related to the first photo editing algorithm, and the second editing option is related to the second photo editing algorithm; process the third photo according to the first photo editing algorithm and the second photo editing algorithm in response to the selection operation, to obtain the first photo; receive a fourth operation of saving the first photo; and save the first photo and an editing record of the first photo in response to the fourth operation.

The third photo is an original photo on which no photo editing algorithm is performed.

After the user adds a photo editing algorithm to the third photo, the first electronic device may display a corresponding editing node in a photo editing interface. In this case, the user may be notified of the photo editing algorithm used for the current photo. In addition, the user may further perform an operation on the editing node displayed in the photo editing interface, so that the photo can be reverted to have an editing effect corresponding to an editing algorithm corresponding to any one or more editing nodes.

For example, the second gallery interface may be the user interface 1200 shown in FIG. 1C.

For example, the third user interface may be the user interface 1300 shown in FIG. 1D.

For example, the first editing option or the second editing option may be any two of the "filter" addition algorithm shown in FIG. 1E, the watermark addition algorithm shown in FIG. 2C, and the cropping algorithm shown in FIG. 3A. The second photo and the first photo may be any two of the photo 1501 shown in FIG. 1E, the photo 2401 shown in FIG. 2D, and the photo 3201 shown in FIG. 3C.

In a possible implementation, the second user interface further includes a second option, and the second option includes the first node.

In this way, the first node is used to notify the user that the second photo is obtained according to the first photo editing algorithm.

For example, the second option may be the re-editing option 5301 shown in FIG. 5D, and the first node may be the editing node 2402 shown in FIG. 5D.

For example, the second option may be the re-editing option 5501 shown in FIG. 5G, and the first node may be the editing node 2101 shown in FIG. 5G.

For example, the second option may be the re-editing option 5801 shown in FIG. 5J, and the first node may be the editing node 5702 shown in FIG. 5J.

In a possible implementation, the second photo is obtained by the first electronic device based on the third photo according to the first photo editing algorithm.

In this way, when the user re-edits the photo, the electronic device can edit the original photo locally according to a photo editing algorithm selected by the user, to obtain a photo editing effect desired by the user.

In a possible implementation, the first electronic device is further configured to: send the third photo and an identifier of the first photo editing algorithm to a server in response to the first operation; and receive the second photo sent by the server, where the second photo is obtained by the server based on the third photo according to the first photo editing algorithm.

In this way, when the user re-edits the photo, the electronic device may edit, through the server, the original photo according to the photo editing algorithm selected by the user. A computing capability of the server is stronger than that of the electronic device. In this way, a computing amount of the electronic device can be reduced, and a speed at which the electronic device re-edits the photo can be increased.

In a possible implementation, the first photo is obtained by the first electronic device by processing the second photo according to the second photo editing algorithm.

In a possible implementation, the first electronic device is further configured to send an identifier of the second photo editing algorithm and the second photo to a server, and the server edits the second photo according to the second photo editing algorithm to obtain the first photo. Then, the server sends the first photo to the first electronic device.

In a possible implementation, the editing record of the first photo includes first algorithm information, the first algorithm information includes a first algorithm structure and first description information, the first algorithm structure includes an identifier of the first photo editing algorithm and an identifier of the second photo editing algorithm, and the first description information includes description information of the first photo editing algorithm and description information of the second photo editing algorithm.

Optionally, the first algorithm structure further includes a sequence of photo editing algorithms. For example, the first photo editing algorithm points to the second photo editing algorithm, which indicates that the first photo editing algorithm is used before the second photo editing algorithm for the photo.

For example, the first algorithm structure may be the algorithm structure shown in (a), (b), or (c) in FIG. 4B.

In a possible implementation, the first electronic device is specifically configured to: obtain the first algorithm information in the editing record of the first photo in response to an editing operation performed on the first photo; and display the first option in the first user interface based on the first algorithm information.

In this way, the electronic device may display an editing node in the photo editing interface based on the saved first algorithm information, so that the user can re-edit the photo based on the editing node.

In a possible implementation, a system further includes a second electronic device. The first electronic device is further configured to send the first photo and the editing record of the first photo to the second electronic device. The second electronic device is configured to receive a fifth operation. The second electronic device is further configured to display a fourth user interface in response to the fifth operation. The fourth user interface includes the first photo and a third option, the third option includes a third node and a fourth node, the third node is related to the first photo editing algorithm, and the fourth node is related to the second photo editing algorithm.

For the edited photo, the first electronic device needs to share the photo with the second electronic device, and the first electronic device further needs to share the editing record of the photo with the second electronic device.

In addition to locally re-editing the photo, the electronic device may further share the photo and the editing record of the photo with the second electronic device. The second electronic device may also re-edit the photo shared by the first electronic device, thereby further improving photo editing efficiency.

For example, the first electronic device may be an electronic device 100, and the second electronic device may be an electronic device 200.

For example, the fourth user interface may be the user interface 7500 shown in FIG. 7F, the third option may be the re-editing option 7506 shown in FIG. 7F, and the third node and the fourth node may be any two nodes in the editing node 7507, the editing node 7508, and the editing node 7509 in the re-editing option 7506 shown in FIG. 7F.

In a possible implementation, the second electronic device is specifically configured to: when having permission to read the editing record of the first photo, obtain the first algorithm information in the editing record of the first photo; and display the third option in the fourth user interface based on the first algorithm information.

In a possible implementation, the second electronic device is further configured to: when having no permission to read the editing record of the first photo, display a fifth user interface, where the fifth user interface includes the first photo.

In this way, after receiving the first photo and the editing record of the first photo that are shared by the first electronic device, the second electronic device may determine, based on the first photo and the editing record of the first photo, whether to re-edit the first photo. When the second electronic device has permission to re-edit the first photo, the second electronic device may display an editing node of the first photo, so that the user can re-edit the first photo displayed by the second electronic device. When the second electronic device has no permission to re-edit the first photo, the second electronic device may not display an editing node of the first photo, to notify the second electronic device that the second electronic device has no permission to re-edit the first photo.

For example, the fifth user interface may be the user interface 7600 shown in FIG. 7G.

In a possible implementation, the first electronic device is further configured to send application information of a first application to the second electronic device, where the first application is an application for editing the third photo to obtain the first photo.

The second electronic device is specifically configured to: display the first photo in a second application; obtain the first algorithm information in the editing record of the first photo when the first application and the second application are a same application; and display the third option in the fifth user interface based on the first algorithm information.

In some embodiments, the first electronic device is further configured to send the application information of the first application to the second electronic device, and the second electronic device is further configured to obtain application information of a second application. When the first application and the second application are a same application, the second application has permission to re-edit the first photo.

In another embodiment, when the first application and the second application are not a same application, if the first application and the second application share a set of photo editing algorithms, the second application also has permission to re-edit the first photo.

With reference to the first aspect, in a possible implementation, the application information of the first application includes any one or more of the following: a name or identifier of the application, a version number of the application, and a development vendor name of the application. The application information of the second application includes any one or more of the following: a name or identifier of the application, a version number of the application, and a development vendor name of the application.

In a possible implementation, description information of the description information of the first photo editing algorithm includes any one or more of the following: the identifier or a name of the first photo editing algorithm, a version of the first photo editing algorithm, and a parameter of the first photo editing algorithm, and description information of the description information of the second photo editing algorithm includes any one or more of the following: the identifier or a name of the second photo editing algorithm, a version of the second photo editing algorithm, and a parameter of the second photo editing algorithm.

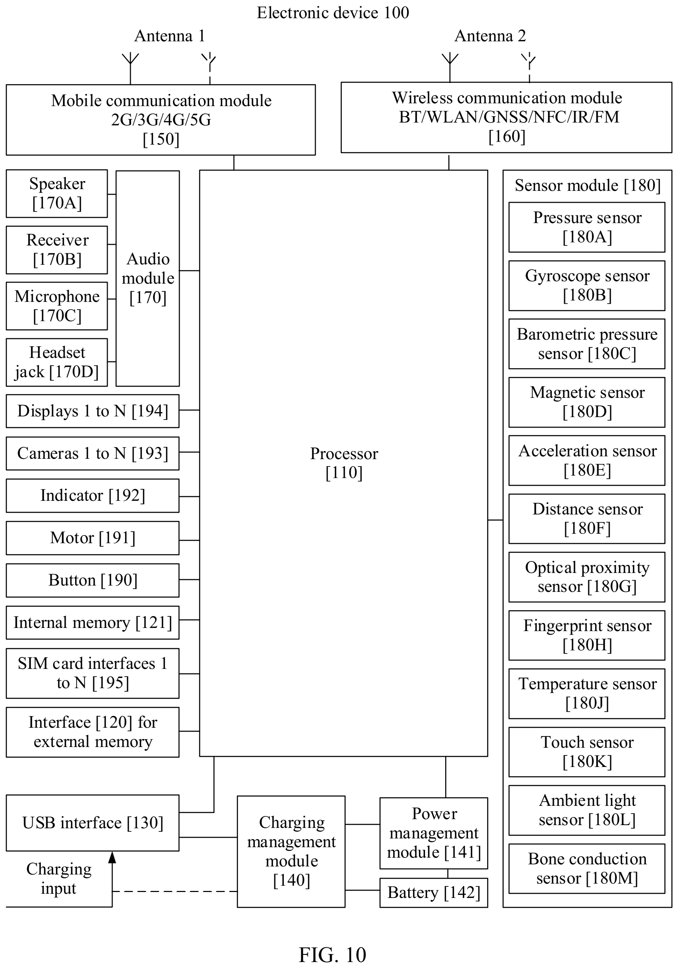

FIG. 10 is a diagram of a hardware structure of an electronic device 100 according to this application.

A hardware structure of the electronic device 200 is similar to the hardware structure of the electronic device 100. For details, refer to the descriptions of the hardware structure of the electronic device 100 in FIG. 10.

The electronic device 100 is used as an example below to describe embodiments in detail. It should be understood that the electronic device 100 shown in FIG. 10 is merely an example, and the electronic device 100 may have more or fewer components than those shown in FIG. 10, or a combination of two or more components, or an arrangement of different components. Various components shown in FIG. 10 may be implemented in hardware including one or more signal processing and/or application-specific integrated circuits, software, or a combination of hardware and software.

The electronic device 100 may include: a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that is just used or cyclically used by the processor 110. If the processor 110 needs to use the instructions or the data again, the processor 110 may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The 12C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset to play an audio through the headset. The interface may be further configured to connect to another electronic device, for example, an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution, applied to the electronic device 100, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same component as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may be manufactured by using an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise and brightness of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, voice recognition, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code, where the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensities may correspond to different operation instructions. For example, when a touch operation whose touch operation intensity is less than a first pressure threshold is performed on a messages application icon, an instruction for viewing an SMS message is executed. When a touch operation whose touch operation intensity is greater than or equal to a first pressure threshold is performed on a messages application icon, an instruction for creating a new SMS message is executed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 shakes, obtains, through calculation based on the angle, a distance for which a lens module needs to compensate, and allows the lens to cancel the shake of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected open or closed state of the leather case or the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer.

The distance sensor 180F is configured to measure a distance. The electronic device 100 may measure a distance in an infrared manner or a laser manner. In some embodiments, in a shooting scene, the electronic device 100 may measure a distance through the distance sensor 180F to implement quick focusing.

The optical proximity sensor 180G may include, for example, a light-emitting diode (LED), and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may alternatively be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may alternatively be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card.

The following describes a software system of the electronic device 100 according to embodiments of this application.

The software system of the electronic device 100 may use a layered architecture, an event-driven architecture, a microkernel architecture, a micro service architecture, or a cloud architecture. In this embodiment of the present invention, an Android system of a layered architecture is used as an example to describe a software structure of the electronic device 100.

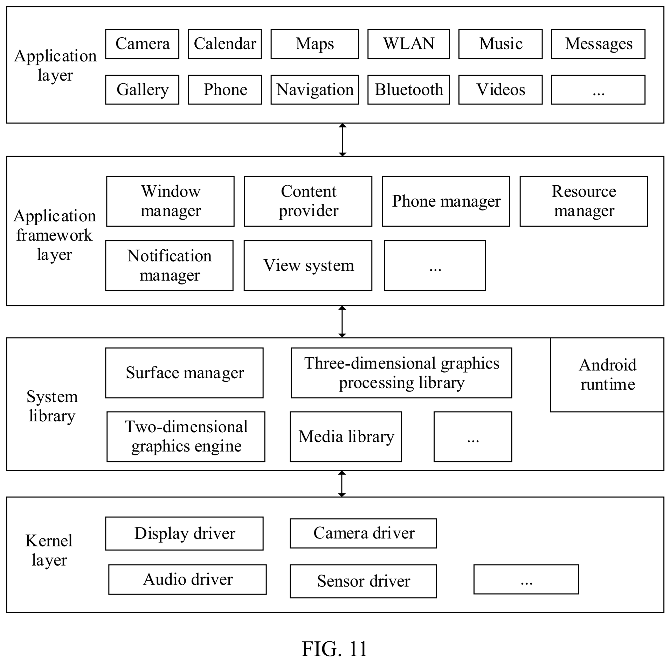

FIG. 11 is a block diagram of the software structure of the electronic device 100 according to this embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 11, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 11, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a photo. The view system may be configured to construct an application. A display interface may include one or more views. For example, a display interface including a messages notification icon may include a view for displaying a text and a view for displaying a photo.

The phone manager is configured to provide a communication function of the electronic device 100, for example, management of a call status (including answering, declining, or the like).

The resource manager provides various resources such as a localized character string, an icon, a photo, a layout file, and a video file for an application.

The notification manager enables an application to display notification information in a status bar, and may be configured to convey a notification message. The notification message may automatically disappear after a short pause without user interaction. For example, the notification manager is configured to notify download completion, give a message notification, and the like. The notification manager may alternatively be a notification that appears in a top status bar of the system in a form of graph or scroll bar text, for example, a notification of an application that runs on a background, or may be a notification that appears on a screen in a form of dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of frequently used audio and video formats, and static image files. The media library may support a plurality of types of audio and video coding formats such as MPEG-4, H.264, MP3, AAC, AMR, JPG, and PNG.

The three-dimensional graphics processing library is configured to implement three-dimensional graphics drawing, photo rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The foregoing descriptions are merely some embodiments and implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

It may be understood that each user interface described in embodiments of this application is merely an example interface, and constitutes no limitation on the solutions of this application. In another embodiment, the user interfaces may use different interface layouts, may include more or fewer controls, and may add or reduce other function options, provided that the user interfaces are based on a same inventive idea provided in this application. All of the user interfaces fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A photo editing system, wherein the system comprises a first electronic device, wherein
the first electronic device is configured to display a first gallery interface, wherein the first gallery interface comprises a first photo; and
the first electronic device is further configured to:
receive an editing operation performed by a user on the first photo;
display the first user interface in response to the editing operation performed on the first photo, wherein an editing interface of the first photo comprises the first photo and a first option, the first option comprises a first node and a second node, the first node is related to a first photo editing algorithm, the second node is related to a second photo editing algorithm, and the first photo is obtained based on a third photo according to the first photo editing algorithm and the second photo editing algorithm;
receive a first operation performed by the user on the first node; and
display a second user interface in response to the first operation, wherein the second user interface comprises a second photo, and the second photo is obtained based on the third photo according to the first photo editing algorithm.

2. The system according to claim 1, wherein the first electronic device is further configured to:
display a second gallery interface, wherein the second gallery interface comprises the third photo;
receive an editing operation performed by the user on the third photo;
display a third user interface in response to the editing operation performed on the third photo, wherein the third user interface comprises the third photo and a plurality of photo editing options;
receive a second operation performed by the user on a first editing option in the plurality of photo editing options, wherein the first editing option is related to the first photo editing algorithm;
obtain the second photo in response to the second operation;
receive a third operation performed by the user on a second editing option in the plurality of photo editing options, wherein the second editing option is related to the second photo editing algorithm;
obtain the first photo in response to the third operation;
receive a fourth operation of saving the first photo; and
save the first photo and an editing record of the first photo in response to the fourth operation.

3. The system according to claim 1, wherein the first electronic device is further configured to:
display a second gallery interface, wherein the second gallery interface comprises the third photo;
receive an editing operation performed by the user on the third photo;
display a third user interface in response to the editing operation performed on the third photo, wherein the third user interface comprises the third photo and a plurality of photo editing options;
receive a selection operation performed by the user on a first editing option and a second editing option in the plurality of photo editing options, wherein the first editing option is related to the first photo editing algorithm, and the second editing option is related to the second photo editing algorithm;
process the third photo according to the first photo editing algorithm and the second photo editing algorithm in response to the selection operation, to obtain the first photo;
receive a fourth operation of saving the first photo; and
save the first photo and an editing record of the first photo in response to the fourth operation.

4. The system according to any one of claims 1 to 3, wherein the second user interface further comprises a second option, and the second option comprises the first node.

5. The system according to any one of claims 1 to 4, wherein the second photo is obtained by the first electronic device based on the third photo according to the first photo editing algorithm.

6. The system according to any one of claims 1 to 4, wherein the first electronic device is further configured to:
send the third photo and an identifier of the first photo editing algorithm to a server in response to the first operation; and
receive the second photo sent by the server, wherein the second photo is obtained by the server based on the third photo according to the first photo editing algorithm.

7. The method according to any one of claims 1 to 6, wherein the first photo is obtained by the first electronic device by processing the second photo according to the second photo editing algorithm.

8. The system according to claim 2 or 3, wherein the editing record of the first photo comprises first algorithm information, the first algorithm information comprises a first algorithm structure and first description information, the first algorithm structure comprises an identifier of the first photo editing algorithm and an identifier of the second photo editing algorithm, and the first description information comprises description information of the first photo editing algorithm and description information of the second photo editing algorithm.

9. The system according to claim 8, wherein the first electronic device is specifically configured to:
obtain the first algorithm information in the editing record of the first photo in response to an editing operation performed on the first photo; and
display the first option in the first user interface based on the first algorithm information.

10. The system according to claim 2, 3, or 8, wherein the system further comprises a second electronic device; and the first electronic device is further configured to:
send the first photo and the editing record of the first photo to the second electronic device;
the second electronic device is configured to receive a fifth operation; and
the second electronic device is further configured to display a fourth user interface in response to the fifth operation, wherein the fourth user interface comprises the first photo and a third option, the third option comprises a third node and a fourth node, the third node is related to the first photo editing algorithm, and the fourth node is related to the second photo editing algorithm.

11. The system according to claim 10, wherein the second electronic device is specifically configured to:
when having permission to read the editing record of the first photo, obtain the first algorithm information in the editing record of the first photo; and
display the third option in the fourth user interface based on the first algorithm information.

12. The system according to claim 11, wherein the second electronic device is further configured to:
when having no permission to read the editing record of the first photo, display a fifth user interface, wherein the fifth user interface comprises the first photo.

13. The system according to claim 11 or 12, wherein the first electronic device is further configured to send application information of a first application to the second electronic device, wherein the first application is an application for editing the third photo to obtain the first photo; and
the second electronic device is specifically configured to:
display the first photo in a second application;
obtain the first algorithm information in the editing record of the first photo when the first application and the second application are a same application; and
display the third option in the fifth user interface based on the first algorithm information.

14. The system according to claim 13, wherein the application information of the first application comprises any one or more of the following: an application name or identifier, an application version number, and a name of an application development vendor.

15. The system according to claim 8 or 9, wherein description information of the description information of the first photo editing algorithm comprises any one or more of the following: the identifier or a name of the first photo editing algorithm, a version of the first photo editing algorithm, and a parameter of the first photo editing algorithm; and
description information of the description information of the second photo editing algorithm comprises any one or more of the following: the identifier or a name of the second photo editing algorithm, a version of the second photo editing algorithm, and a parameter of the second photo editing algorithm.

16. A photo editing method, wherein the method comprises:
displaying, by a first electronic device, a first gallery interface, wherein the first gallery interface comprises a first photo;
receiving, by the first electronic device, an editing operation performed by a user on the first photo;
displaying, by the first electronic device, the first user interface in response to the editing operation performed on the first photo, wherein an editing interface of the first photo comprises the first photo and a first option, the first option comprises a first node and a second node, the first node is related to a first photo editing algorithm, the second node is related to a second photo editing algorithm, and the first photo is obtained based on a third photo according to the first photo editing algorithm and the second photo editing algorithm;
receiving, by the first electronic device, a first operation performed by the user on the first node; and
displaying, by the first electronic device, a second user interface in response to the first operation, wherein the second user interface comprises a second photo, and the second photo is obtained based on the third photo according to the first photo editing algorithm.

17. The method according to claim 16, wherein before displaying, by the first electronic device, the first gallery interface, the method further comprises:
displaying, by the first electronic device, a second gallery interface, wherein the second gallery interface comprises the third photo;
receiving, by the first electronic device, an editing operation performed by the user on the third photo;
displaying, by the first electronic device, a third user interface in response to the editing operation performed on the third photo, wherein the third user interface comprises the third photo and a plurality of photo editing options;
receiving, by the first electronic device, a second operation performed by the user on a first editing option in the plurality of photo editing options, wherein the first editing option is related to the first photo editing algorithm;
obtaining, by the first electronic device, the second photo in response to the second operation;
after obtaining the second photo, receiving, by the first electronic device, a third operation performed by the user on a second editing option in the plurality of photo editing options, wherein the second editing option is related to the second photo editing algorithm;
obtaining, by the first electronic device, the first photo in response to the third operation;
receiving, by the first electronic device, a fourth operation of saving the first photo; and
saving, by the first electronic device, the first photo and an editing record of the first photo in response to the fourth operation.

18. The method according to claim 16, wherein before displaying, by the first electronic device, the first gallery interface, the method further comprises:
displaying, by the first electronic device, a second gallery interface, wherein the second gallery interface comprises the third photo;
receiving, by the first electronic device, an editing operation performed by the user on the third photo;
displaying, by the first electronic device, a third user interface in response to the editing operation performed on the third photo, wherein the third user interface comprises the third photo and a plurality of photo editing options;
receiving, by the first electronic device, a selection operation performed by the user on a first editing option and a second editing option in the plurality of photo editing options, wherein the first editing option is related to the first photo editing algorithm, and the second editing option is related to the second photo editing algorithm;
processing, by the first electronic device, the third photo according to the first photo editing algorithm and the second photo editing algorithm in response to the selection operation, to obtain the first photo;
receiving, by the first electronic device, a fourth operation of saving the first photo; and
saving, by the first electronic device, the first photo and an editing record of the first photo in response to the fourth operation.

19. The method according to any one of claims 16 to 18, wherein the second user interface further comprises a second option, and the second option comprises the first node.

20. The method according to any one of claims 16 to 19, wherein the second photo is obtained by the first electronic device based on the third photo according to the first photo editing algorithm.

21. The method according to any one of claims 16 to 18, wherein before displaying, by the first electronic device, the second user interface, the method further comprises:
sending, by the first electronic device, the third photo and an identifier of the first photo editing algorithm to a server in response to the first operation; and
receiving, by the first electronic device, the second photo sent by the server, wherein the second photo is obtained by the server based on the third photo according to the first photo editing algorithm; and
displaying, by the first electronic device, the second user interface specifically comprises:
displaying, by the first electronic device, the second user interface in response to receiving the second photo sent by the server.

22. The method according to any one of claims 16 to 21, wherein the first photo is obtained by the first electronic device by processing the second photo according to the second photo editing algorithm.

23. The method according to claim 17 or 18, wherein the editing record of the first photo comprises first algorithm information, the first algorithm information comprises a first algorithm structure and first description information, the first algorithm structure comprises an identifier of the first photo editing algorithm and an identifier of the second photo editing algorithm, and the first description information comprises description information of the first photo editing algorithm and description information of the second photo editing algorithm.

24. The method according to claim 23, wherein displaying, by the first electronic device, the first user interface specifically comprises:
obtaining, by the first electronic device, the first algorithm information in the editing record of the first photo in response to an editing operation performed on the first photo; and
displaying, by the first electronic device, the first option in the first user interface based on the first algorithm information.

25. The method according to claim 17, 18, or 23, wherein after saving, by the first electronic device, the first photo and the editing record of the first photo, the method further comprises:
sending, by the first electronic device, the first photo and the editing record of the first photo to a second electronic device, wherein the editing record of the first photo is used by the second electronic device to process the first photo according to the first photo editing algorithm and the second photo editing algorithm.

26. The system according to claim 23, wherein description information of the description information of the first photo editing algorithm comprises any one or more of the following: the identifier or a name of the first photo editing algorithm, a version of the first photo editing algorithm, and a parameter of the first photo editing algorithm; and
description information of the description information of the second photo editing algorithm comprises any one or more of the following: the identifier or a name of the second photo editing algorithm, a version of the second photo editing algorithm, and a parameter of the second photo editing algorithm.

27. An electronic device, wherein the electronic device is a first electronic device, the first electronic device comprises a memory and a processor, the memory is coupled to the processor, the memory is configured to store a computer program, and when the processor invokes and executes the computer program, the first electronic device is enabled to perform the method according to any one of claims 16 to 26.

28. A computer-readable storage medium, comprising instructions, wherein when the instructions are run on a first electronic device, the first electronic device is enabled to perform the method according to any one of claims 16 to 26.
